# EUROPÄISCHE PATENTSCHRIFT

(11) **EP 1 435 082 B1**
(45) Veröffentlichungstag und Bekanntmachung des Hinweises auf die Patenterteilung: **14.12.2005**
(21) Anmeldenummer: 02767408.4
(22) Anmeldetag: 21.08.2002
(51) Int. Cl.: G09B 9/04

(54) **FAHRSIMULATOR**
DRIVING SIMULATOR
SIMULATEUR DE CONDUITE

(30) Priorität: 11.10.2001 DE 10150382
(43) Veröffentlichungstag der Anmeldung: 07.07.2004
(73) Patentinhaber: DaimlerChrysler AG, 70567 Stuttgart (DE)
(72) Erfinder: AMMON, Dieter, 71686 Remseck-Aldingen (DE); BOETTIGER, Friedrich, 73733 Esslingen (DE); DUPLITZER, Enno, 70329 Stuttgart (DE); FAUL, Rüdiger, 70186 Stuttgart (DE); GÖTZ, Jochen, 71131 Jettingen (DE); HERMLE, Markus, 70567 Stuttgart (DE); HOFFMEYER, Friedrich, 12159 Berlin-Friedenau (DE); LAESSING, Marc, 73271 Holzmaden (DE); PETERSEN, Uwe, 71144 Steinenbronn (DE); RUSSOW, Jörg, 71263 Weil der Stadt (DE); SCHULZ, Thomas, 13467 Berlin (DE)
(86) Internationale Anmeldenummer: PCT/EP2002/009301
(87) Internationale Veröffentlichungsnummer: WO 2003/034373

(56) Entgegenhaltungen:
- WO-A-00/77762
- FR-A- 2 677 155
- GB-A- 2 354 734
- US-A- 3 302 801
- US-A- 3 784 028
- US-A- 4 106 641
- US-A- 5 492 067
- US-A- 5 919 045

## Beschreibung

Die Erfindung betrifft ein Bewegungssystem zur Erzeugung von Bewegungseindrücken auf Testpersonen gemäß dem Oberbegriff des Anspruchs 1, wie es beispielsweise aus der DE 39 36 877 A1 als bekannt hervorgeht.

Das Dokument US-A- 5919045 offenbart ein Bewegungssystem für einen Fahrsimulator zur Erzeugung von Bewegungseindrücken auf Testpersonen mit einer Kabine, die einen Sitz und Lenkeinrichtungen und Betätigungspedale umfasst,
umfassend dass,
die Kabine ortsfest auf einem Manipulator angeordnet ist, welcher die folgenden Komponenten umfasst:
eine zweiachsige Bewegungseinheit zur Bewegung des Zusammenbaus aus Teller und Kabine,
eine Horizontalverschiebevorrichtung zur gesteuerten Verschiebung und Beschleunigung des Zusammenbaus aus zweiachsiger Bewegungseinheit, Teller und Kabine entlang der beiden Horizontalachsen,
und dass die zweiachsige Bewegungseinheit ortsfest auf einem Trägerschlitten montiert ist, welcher frei verschieblich auf einer durch die Verfahrwege der Horinzontalverschiebevorrichtung aufgespannten ebenen Bodenfläche gelagert ist und mittels der Horinzontalverschiebevorrichtung gegenüber dieser Bodenfläche gezogen und/oder geschoben wird

Im Kraftfahrzeugbau besteht ein großes Interesse daran, Entwicklungszeiten und -kosten immer stärker zu reduzieren. Daraus resultiert der Bedarf, bereits in frühen Entwicklungsstadien Gestaltungsspielräume zu konkretisieren und physikalische Grenzen aufzuzeigen, um die anschließenden Entwicklungsphasen verkürzen und Iterationsschleifen einsparen zu können. In einem sehr frühen Entwicklungsstadium müssen daher Informationen zu dem zu erwartenden Fahrkomfort ("Ride" -Eigenschaften) und dem Fahrverhalten ("Handling"-Eigenschaften) eines Fahrzeugkonzepts vorliegen, um in den folgenden kosten- und zeitintensiven Realisierungsstadien Entwicklungsschleifen zu vermeiden.

Zum Erproben von Fahrzeugkonzepten in frühen Entwicklungsstadien kommen - neben Off-Line-Simulationen - insbesondere Fahrsimulatoren zum Einsatz. Sie bieten grundsätzlich die Möglichkeit, ein im Rechner aufgebautes mathematischsynthetisches Fahrzeugkonzept einschließlich der elektronischen Steuer- und Regelsysteme und bereits eingebundenen Hardwarekomponenten von Fahrern beliebig anregen zu lassen und für sie "erfahrbar" zu machen. Ein Fahrsimulator ermöglicht somit im Prinzip eine virtuelle Fahrt mit einem digitalen Fahrzeug, entsprechend der bisherigen Versuchsfahrt im herkömmlichen Entwicklungsprozeß. Notwendige Voraussetzung für einen wirksamen Einsatz eines Fahrsimulators als Werkzeug in der Fahrzeugentwicklung ist die realistische Simulation einer größtmöglichen Anzahl von Fahrmanövern, welche sowohl den Fahrkomfort als auch das Fahrverhalten als auch Mischungen dieser Eigenschaften betreffen. Hierzu müssen einerseits geeignete Systeme und Verfahren zur Visualisierung von Verkehrssituationen, zur Fahrzeug- und Geräuschsimulation etc. zur Verfügung stehen. Andererseits muss ein Bewegungssystem bereitgestellt werden, mit Hilfe dessen eine möglichst realitätsnahe Wahrnehmung von Beschleunigungen und Beschleunigungsänderungen durch den Fahrer erreicht werden kann, und zwar sowohl bezüglich der "Ride"-Eigenschaften als auch der "Handling" -Eigenschaften des Fahrzeugs.

Aus der gattungsbildenden DE 39 36 877 A1 ist ein System zur Simulation realer Fahrsituationen bekannt, bei dem Fahrzeug-Bedienelemente (wie Lenkrad, Betätigungspedale etc.) beweglich gegenüber der Fahrzeugkabine angeordnet sind. Über zugeordnete Stellelemente, welche mit Hilfe einer Steuereinheit angesteuert werden, können diese Bedienelemente in mehreren Bewegungsrichtungen relativ zueinander und gegenüber dem Sitz veränderlich bewegt werden: Die Bewegungsarten bestimmen sich dabei aus der Art der zu simulierenden Fahrzeugbewegung. Die beweglichen Elemente des in der DE 39 36 877 A1 beschriebenen Fahrsimulations-Systems verfügen über sehr geringe Verfahrwege. Daher eignet sich dieses System ausschließlich zur Simulation von Fahrmanövern, in denen hochfrequente Anregungen (> 3 Hz) eine tragende Rolle spielen. Ein solches Fahrsimulations-System ist somit beschränkt auf die Erprobung der "Ride"-relevanten Eigenschaften des Fahrzeugs, z.B. der Fahreindruck auf Rüttelstrecken, beim Überfahren von Kanten etc.

"Handling"-Eigenschaften des Fahrzeugs können mit Hilfe des aus der DE 39 36 877 A1 bekannten Systems nicht realistisch dargestellt werden, da zu ihrer Realiserung niederfrequente Beschleunigungs-Wirkungen eine entscheidende Rolle spielen. Um niederfrequente Anregungen des Fahrzeugs realisieren zu können, kommen Fahrsimulatoren zum Einsatz, deren Fahrerkabinen als Ganzes beweglich gelagert sind und in unterschiedlichen Bewegungsachsen lateral und rotatorisch über gewisse Weg- und Winkelstrecken bewegt werden. Hierdurch können "Handling"-relevante Zustände wie Beschleunigungsfahrt, Kurvenfahrt, Bremsfahrt etc. erzeugt werden. Solche Systeme sind z.B. aus der DE 28 42 409 A1 und der EP 335 585 A1 bekannt. Das untere Ende des erreichbaren Frequenz-Spektrums ist hierbei direkt durch die maximalen zur Verfügung stehenden Verfahrwege des Fahrsimulators begrenzt. Zwar ist es, wie in der DE 28 42 409 A1 beschrieben, unter Zuhilfenahme sogenannter "Washout-Algorithmen" möglich, längerandauernde Horizontalbeschleunigungen durch eine Drehbewegung der Fahrzeugkabine zu simulieren, jedoch können "Handling"-relevante Manöver im Frequenbereich unterhalb von etwa 0.7 Hz durch solche Verfahren nur sehr unzureichend abgebildet werden.

Einen ersten Versuch, neben den niederfrequenten ("Handling"-relevanten) Anregungen auch hochfrequente ("Ride"-relevante) Anregungen in einem einzigen System simulieren zu können, stellt der NADS ("National Advanced Driving Simulator", http://www.nads-sc.uiowa.edu) der University of Iowa dar. Dieses System umfasst einen auf einem Hexapoden fixierten Fahrzeugdom; der Zusammenbau aus Hexapod und Fahrzeugdom ist auf einem Paar gekreuzter Linearachsen mit Bandzugantrieben gelagert, mit deren Hilfe der Zusammenbau über eine Grundfläche von 20m x 20m bewegt werden kann. Die Räder des zu untersuchenden Fahrzeugs sind über Stempel mit der Basisplatte des Doms verbunden, wobei mit Hilfe dieser Stempel Vertikalanregungen des Fahrzeugs erreicht werden können.

Während der NADS in gewissem Maße und in ausgewählten Anregungsrichtungen sowohl "Handling"-relevante als auch "Ride"-relevante Anregungen ermöglicht, weist er einige bedeutende Unzulänglichkeiten auf:
- die "Ride"-Aktorik des NADS (Vertikalanregung der Fahrzeugräder) in Zusammenwirkung mit der Gesamtkinematik liefert für einige Fahrsituationen unzureichende Bewegungseindrücke; so ist z.B. eine realitätsnahe Simulation des Fahrens auf Schlechtwegen mit den damit verbundenen höherfrequenten Horizontalbeschleunigungen (> 20 Hz) nicht möglich;
- die Grundfläche des NADS ist zu klein, um bestimmte entwicklungsrelevante Fahrmanöver mit wichtigen niedrigfrequenten Anteilen (z.B. Spurwechsel bei Vollbremsung, Kurvenbremsen) realistisch simulieren zu können.

Der Erfindung liegt daher die Aufgabe zugrunde, ein Bewegungssystem für einen Fahrsimulator bereitzustellen, mit dem - im Vergleich zu bekannten Bewegungssystemen - eine wesentlich größere Anzahl entwicklungsrelevanter Fahrmanöver realistisch dargestellt werden kann.

Die Aufgabe wird erfindungsgemäß durch die Merkmale des Anspruchs 1 gelöst.

Die Lösung beruht auf der Überlegung, dass zur realitätsnahen Simulation einer hohen Anzahl von Fahrmanövern sowohl Anregungen im niederfrequenten Bereich als auch Anregungen im hochfrequenten Bereich notwendig sind. Erfindungsgemäß wird hierfür ein kaskadiertes System verwendet, bei dem die Gesamtaktorik aufgeteilt wird in
- eine Aktorik für kleine, hochfrequente Bewegungen (die eine besonders wichtige Rolle bei der Simulation kleiner Geschwindigkeiten spielen) und
- eine Aktorik für große, niederfrequente Bewegungen (die eine besonders wichtige Rolle bei der Simulation hoher Geschwindigkeiten spielen).

Als Aktorik zur Realisierung der hochfrequenten Anregungen wird ein mehrachsiges "Ride" -System verwendet, dessen wesentliche Merkmale z.B. aus der DE 39 36 877 A1 bekannt ist; es umfasst eine Kabine mit einem Sitz und Bedienungselementen, wobei der. Sitz und/oder die Bedienungselemente beweglich angeordnet sind und über zugeordnete Stellelemente in mehreren Bewegungsrichtungen relativ zueinander bewegt werden können. Erfindungsgemäß wird dieses "Ride"-System auf einen mehrachsigen Manipulator aufgesetzt, der als Aktorik zur Realisierung der niederfrequenten Anregungen dient. Der Manipulator seinerseits stellt wiederum ein kaskadiertes System dar und umfasst einen Drehteller, eine sechsachsige Bewegungseinheit sowie eine Horizontalverschiebevorrichtung: So ist das "Ride"-System auf dem Drehteller montiert und kann mit Hilfe des Drehtellers um seine Vertikalachse gedreht werden; der Zusammenbau aus "Ride" -System und Drehteller ist auf der sechsachsigen Bewegungseinheit montiert und wird mit Hilfe dieser Bewegungseinheit im niederfrequenten Bereich gesteuert bewegt; der Zusammenbau aus "Ride" -System, Drehteller und sechsachsiger Bewegungseinheit wiederum wird mit Hilfe der Horizontalverschiebevorrichtung entlang der beiden Horizontalachsen bewegt, wobei diese Verschiebevorrichtung zur Realisierung der niederstfrequenten Bewegungen dient.

Um möglichst niederfrequente Bewegungen darstellen zu können, muss die Horizontalverschiebevorrichtung (als die in der Kaskade am niedrigsten angeordnete Aktorstufe) möglichst große Wege überspannen. Allerdings muss dabei sichergestellt werden, dass eine Vergrößerung der Bewegungsfläche nur mit einer sehr moderaten Vergrößerung der zu bewegenden Massen einhergeht, da ansonsten eine große Bewegungsfläche aufgrund der auftretenden Kräfte und Momente nicht realisierbar ist. - Um dieser Anforderung gerecht zu werden, ist die sechsachsige Bewegungseinheit erfindungsgemäß auf einem Trägerschlitten montiert, welcher frei verschieblich auf einer durch die Verfahrwege der Horizontalverschiebevorrichtung aufgespannten ebenen Bodenfläche gelagert ist und mittels der Horizontalverschiebevorrichtung gegenüber dieser Bodenfläche gezogen und/oder geschoben wird. Die Funktionen des Tragens einerseits und derjenigen des Führens in Horizontalrichtung bzw. der Momentenaufnahme in allen drei Raumrichtungen andererseits wird durch diese Gestaltung des Bewegungssystems entkoppelt. Damit wird - im Vergleich zu aus dem Stand der Technik bekannten Bewegungssystemen - bei weniger zu bewegender Masse eine größere Grundfläche überdeckbar. Insbesondere ermöglicht das erfindungsgemäße Bewegungssystem die Überdeckung einer Grundfläche von mindestens 40m x 40m, was mit einer erheblichen Ausweitung des Frequenzspektrums des Fahrsimulators in den niedrigstfrequenten Bereich verbunden ist.

Um Verschiebungen und Beschleunigungen der aus Trägerschlitten, sechsachsiger Bewegungseinheit, Drehteller und Kabine bestehenden Basiseinheit ruckfrei zu gestalten, muss die Reibung zwischen Basiseinheit und Grundfläche möglichst gering sein. Vorteilhafterweise ist der Trägerschlitten daher über Luftlager und/oder Luftkissen gegenüber der Bodenfläche gelagert (siehe Anspruch 2). Eine solche Luftlagerung gestattet eine freie Verschieblichkeit der Basiseinheit auf der Bodenfläche und ist mit minimalen Reibkräften zwischen Basiseinheit und Bodenfläche verbunden. Weiterhin zeichnen sich Luftlager durch eine hohe Steifigkeit aus, was eine wichtige Voraussetzung für ein störungsfreies Gleiten der Basiseinheit auf der Bodenfläche darstellt. - Alternativ kann die Basiseinheit auch über Gleitlager oder über Rollenlager gegenüber der Bodenfläche gelagert sein.

In einer ersten besonders vorteilhaften Ausgestaltung besteht die Horizontalverschiebevorrichtung aus zwei Linearverschiebevorrichtungen (Anspruch 3), und zwar
- einer ersten Linearverschiebevorrichtung zur gesteuerten Verschiebung und Beschleunigung der Basiseinheit entlang einer ersten Horizontalachse (Y-Richtung) und
- einer zweiten Linearverschiebevorrichtung zur gesteuerten Verschiebung und Beschleunigung des Zusammenbaus aus erster Linearverschiebevorrichtung und Basiseinheit entlang einer zweiten Horizontalachse (X-Richtung), welche näherungsweise senkrecht gegenüber der ersten Horizontalachse ausgerichtet ist.

Diese Ausgestaltung der Horizontalverschiebevorrichtung ermöglicht eine weitere Kaskadierung des Bewegungssystems, da die (großflächige) Horizontalbewegung der Basiseinheit mittels zweier hierarchisch miteinander verbundener Linearverschiebevorrichtungen erfolgt.

Zwischen den aufeinanderfolgenden Kaskadenstufen sollten nur minimale Wechselwirkungen bzw. Verkopplungen auftreten, um eine modulare Gesamt-Regelung des Bewegungssystems möglich zu machen. Dadurch wird die Systemkomplexität reduziert und die Beherrschbarkeit erhöht.

Die zweite Linearverschiebevorrichtung ist zweckmäßigerweise als Portalbrücke ausgestaltet (siehe Anspruch 3). Unter dem Begriff "Portalbrücke" soll in diesem Zusammenhang eine Verschiebevorrichtung verstanden werden, welche transversal zu ihrer Bewegungsrichtung die gesamte Breite der Basisfläche überspannt, welche sich an ihren beiden transversalen Enden auf Schienen (oder alternative Führungsmittel) abstützt und welche mittels an den beiden transversalen Enden der Portalbrücke angeordneter bzw. angreifender Linearantriebe gegenüber der Basisfläche verschoben und beschleunigt wird. Die Portalbrücke leitet einerseits die über die Linearantriebe eingeleiteten Antriebskräfte in X-Richtung auf die Basiseinheit weiter und leitet andererseits die Reaktionskräfte der Basiseinheit in X-Richtung an die Linearantriebe ab.

Die Portalbrücke sollte eine möglichst hohe lokale Steifigkeit aufweisen, um eine gute Entkopplung der X- und Y-Bewegungen der Linearverschiebevorrichtungen sicherzustellen und um die Kräfte und Belastungen, die bei Beschleunigungen der Basiseinheit seitens der ersten Linearverschiebevorrichtung auf die Portalbrücke ausgeübt werden, möglichst gering zu halten. Andererseits sollte die Masse der Portalbrücke möglichst gering sein, um die Kräfte, die zum Beschleunigen und Abbremsen der bewegten Massen des Fahrsimulators aufgebracht werden müssen, möglichst gering zu halten. Um diesen beiden Anforderungen gerecht zu werden, ist die Tragstruktur der Portalbrücke zweckmäßigerweise als Fachwerkstruktur ausgebildet, mit Hilfe derer die am Anlenkpunkt der ersten Linearverschiebevorrichtung eingeleiteten Kräfte auf die gesamte Portalbrücke verteilt werden können. Im Anlenkbereich der ersten Linearverschiebevorrichtung, weist die Portalbrücke weiterhin zweckmäßigerweise einen verstärkten Hohlträger auf, durch den eine besonders hohe lokale Steifigkeit erreicht werden kann.

Die Portalbrücke stützt sich an ihren beiden transversalen Enden auf die Basisfläche bzw. auf geeignet gestalteten Schienen ab. In Abhängigkeit von der Größe der zu überspannenden Basisfläche und dem Gewicht der Portalbrücke kann es vorteilhaft sein, zusätzlich zu dieser endseitigen Stützung der Portalbrücke weitere Stützen im Mittelbereich der Portalbrücke vorzusehen (siehe Anspruch 5). Zweckmäßigerweise sind diese Stützen gegenüber der Basisfläche luftgelagert, um ein möglichst reibungsarmes Gleiten der Portalbrücke gegenüber der Basisfläche zu ermöglichen.

Die Bewegungsanregung der Portalbrücke kann mittels Bandzugantrieben erfolgen (siehe Anspruch 6). Hierbei kommen Bänder, insbesondere Stahlbänder, zum Einsatz, die in Y-Richtung verlaufen, an den transversalen Enden der Portalbrücke befestigt sind und eine Vorspannung aufweisen. Die Bänder umlaufen an den Enden des Bewegungsfeldes jeweils eine Trommel, mittels derer eine Zugkraft auf das jeweilige Band (und somit auf das fest mit diesem Band verbundene Ende der Portalbrücke) ausgeübt werden kann. Der Antrieb der Trommeln erfolgt über Elektromotoren. Um eine hochgenaue Ausrichtung der Portalbrücke zu erreichen, müssen die beiden Bandzugantriebe synchron gesteuert werden.

Alternativ kann die Bewegungsanregung der Portalbrücke mittels zweier elektrischer Linearantriebe erfolgen, welche an den beiden transversalen Enden der Portalbrücke angeordnet sind (siehe Anspruch 7). Diese Lösung hat gegenüber Bandzugantrieben den Vorteil einer kompakteren Bauform, da die Läufer direkt an den Enden der Portalbrücke angeordnet sind und die stationären Elemente in die Schienen integriert werden können. Weiterhin wird bei Verwendung von elektrischen Linearantrieben - im Unterschied zu Bandzugantrieben - die Gefahr unkoordinierter mechanischer Schwingungsanregungen des Systems weitgehend unterbunden. Da elektrische Linearantriebe keine Zwischengetriebe benötigen, sind sie außerdem besonders reibungsarm. Um eine hochgenaue Ausrichtung der Portalbrücke zu erreichen, müssen die beiden elektrischen Linearantriebe synchron angesteuert werden.

Durch die oben beschriebene synchrone Steuerung der beiden endseitig an der Portalbrücke angreifenden Antriebsmotoren können Verdrehungen der Portalbrücke um die Vertikalachse im Normalbetrieb weitgehend unterbunden werden; im Fehlerfall können jedoch erhebliche Verdrehungen auftreten. Daher ist es zweckmäßig, einen Mechanismus vorzusehen, mit Hilfe dessen Verdrehungen der Portalbrücke ausgeglichen und Schäden der Portalbrücke aufgrund irreversibler Verwindungen vermieden werden können. Hierzu wird das eine Ende der Portalbrücke drehbar gegenüber dem an diesem Ende angreifenden Antriebselement gelagert, während die Anbindung des andere Endes der Portalbrücke an das an dieser Stelle angreifende Antriebselement über eine begrenzt linear in Y-Richtung verschiebliche Drehverbindung erfolgt (siehe Anspruch 8).

Zur gesteuerten Verschiebung und Beschleunigung der Basiseinheit in Y-Richtung ist auf der Portalbrücke eine zweite Linearverschiebevorrichtung vorgesehen, welche vorzugsweise durch einen elektrischen Linear-Direkt-Antrieb gebildet ist (siehe Anspruch 9). Um Verdrehungen und Verkantungen der Basiseinheit gegenüber der zweiten Verschiebevorrichtung zu vermeiden, ist der Trägerschlitten der Basiseinheit zweckmäßigerweise über Koppelelemente gegenüber der zweiten Linearverschiebevorrichtung abgestützt (siehe Anspruch 10). Solche Koppelelemente ermöglicht den Ausgleich von Verdrehungen in beliebigen Raumrichtungen zwischen Basiseinheit und zweiter Linearverschiebeeinheit. In einer besonders vorteilhaften Ausführungsform der Koppelelemente ist der Läufer des elektrischen Linearantriebs mit zwei passiven Elementen verbunden, welche in Y-Richtung gegenüber dem Läufer versetzt und über Feder-Dämpfer-Elemente an ihn gekoppelt sind. Die Basiseinheit ist an den Läufer des elektrischen Linearantriebs über eine mehrgelenkige Strebe und an die beiden passiven Elemente über schwenkbare Streben angelenkt.

Um einen möglichst geringen Verschleiß des Bewegungssystems aufgrund von Verwindungen der Portalbrücke zu erreichen bzw. daraus erwachsende Störbeschleunigungen zu vermeiden, müssen die seitens der Basiseinheit auf die Portalbrücke wirkenden Reaktionskräfte möglichst momentenfrei in diese eingeleitet werden. Um dies sicherzustellen, befinden sich die Anlenkungspunkte der Basiseinheit an die Portalbrücke vorteilhafterweise auf der Höhe des Schwerpunkts der Portalbrücke, so dass die Einleitung sämtlicher horizontaler Kräfte in die Portalbrücke in Höhe des Schwerpunkts der Portalbrücke erfolgt (siehe Anspruch 11). Weiterhin ist es zweckmäßig, auch die Schienen der Portalbrücke, über welche die Reaktionskräfte der Basiseinheit in X-Richtung an die Linearantriebe abgeleitet werden, in dieser Höhe anzuordnen. Wird die Portalbrücke zudem in ihrer Höhenlage gegenüber der Basiseinheit so angeordnet, dass der horizontale Kraftfluß von und zur Basiseinheit in Höhe des Schwerpunkts der Basiseinheit erfolgt, so können die Vertikallager der Basiseinheit von der ansonsten notwendigen Aufnahme von Zusatzkräften aufgrund von Stützmomenten entlastet werden.

Um bei Betriebsfehlern und insbesondere bei Stromausfällen schwerwiegende Schädigungen des Bewegungssystems zu vermeiden, sind die Antriebe der beiden Linearverschiebevorrichtungen zweckmäßigerweise mit passiven Bremssystemen (z.B. Wirbelstrontbremsen) versehen, durch welche im Notfall eine schnelle automatische Bremsung der Horizontalachsen des Bewegungssystems erreicht werden kann (siehe Anspruch 12). Weiterhin sind an beiden Achsen Endanschläge vorgesehen (siehe Anspruch 13). Um weiterhin bei Stromausfall die Luftlagerung der Basiseinheit zumindest solange sicherzustellen, bis die Basiseinheit zu einem vollständigen Stopp gelangt ist, empfiehlt es sich weiterhin, ein Druckreservoir vorzusehen.

Alternativ zur Ausgestaltung der Horizontalverschiebevorrichtung als zwei kaskadiert angeordnete Linearverschiebevorrichtungen kann die Horizontalverschiebevorrichtung auch durch über Kreuz angeordnete Bandzugantriebe realisiert werden (siehe Anspruch 14). Dabei wird die Kaskadierung der X- und Y-Bewegung aufgelöst und eine Minimierung der mit hoher Güte zu bewegenden Massen erreicht. Um eine hochgenaue Bewegungssteuerung der Basiseinheit sicherstellen zu können, empfiehlt es sich, sowohl entlang der X- als auch entlang der Y-Richtung je zwei parallel verlaufende Bandzugantriebe vorzusehen, die jeweils synchron gesteuert werden.

In einer weiteren Ausführungsform wird die Horizontalverschiebevorrichtung durch einen elektromagnetischen Planarantrieb gebildet (siehe Anspruch 15). Hierzu ist in der Bodenfläche ein regelmäßiges Raster von Magneten vorgesehen.
Weiterhin sind Verfahrschuhe vorgesehen, welche reibungsarm (z.B. über Luftlager) gegenüber der Bodenfläche verschiebbar sind. Jeder der Verfahrschuhe trägt eine Anordnung elektromagnetischer Spulen, mit Hilfe derer der Verfahrschuh gezielt gegenüber den Magneten der Bodenfläche verschoben werden kann. Die auf dem Trägerschlitten montierte Basiseinheit ist mechanisch an den bzw. die Verfahrschuhe gekoppelt und wird mit Hilfe dieser Verfahrschuhe gegenüber der Bodenfläche bewegt. - Um die bei der Bewegung auf die Verfahrschuhe ausgeübten Momente möglichst gering zu halten bzw. möglichst symmetrisch zu verteilen, ist es vorteilhaft, mindestens zwei Verfahrschuhe vorzusehen und diese symmetrisch um den Trägerschlitten herum anzuordnen. Die mehreren Verfahrschuhe werden parallel und synchron zueinander bewegt, so dass der Trägerschlitten eine feste Raumlage relativ zu diesen Verfahrschuhen einnimmt (siehe Anspruch 16).

Die Bewegung der auf dem Trägerschlitten angeordneten sechsachsigen Bewegungseinheit erfolgt zweckmäßigerweise mit Hilfe elektrischer Antriebe (siehe Anspruch 17). Im Unterschied zu einem hydraulischen Antrieb, der apparativ sehr aufwendig ist und mit großen und schweren Aggregaten, Pumpen, Hochdruckleitungen etc. verbunden ist, hat ein elektrischer Antrieb der Bewegungseinheit den Vorteil, apparativ vergleichsweise einfach, leichter handhabbar und mit wesentlich geringeren Gewichten verbunden zu sein.

Als sechsachsige Bewegungseinheit kommt vorteilhafterweise ein Hexapod zum Einsatz (siehe Anspruch 18). Ein solcher Hexapod umfasst sechs auf dem Trägerschlitten fixierte, in ihrer Länge verstellbare Streben, an deren Enden eine Bewegungsplattform befestigt ist. Dies ermöglicht eine Bewegung der Bewegungsplattform in allen sechs Raumfreiheitsgraden, d.h. in drei translatorischen Freiheitsgraden und drei rotatorischen Freiheitsgraden, wobei eine hohe Kraftaufnahme gewährleistet werden kann. Hexapoden sind z.B. aus der DE 196 36 100 A1 und der WO99/55488 bekannt.

Um eine optische und akustische Trennung zwischen der Kabine und der Umgebung (Simulatorhalle und Bewegungssystem) zu erreichen, ist es zweckmäßig, oberhalb der Bewegungsplattform des Hexapods einen Dom vorzusehen, welcher die Fahrzeugkabine allseitig umgibt (siehe Anspruch 19). Der Dom umfasst eine Projektionsfläche für ein Fahrsimulator-Visualisierungssystem, mittels dessen die Verkehrszenarien während der Versuchsfahrt dargestellt werden. Akustisch werden durch den Dom die Betriebsgeräusche des Bewegungssystems gegenüber dem Dominnenraum gedämpft. Dadurch wird sichergestellt, dass die im Soundsystem der Fahrzeugkabine erzeugten Geräusche während der Versuchsfahrt nicht durch artfremde Betriebsgeräusche verfälscht werden.

Im folgenden wird die Erfindung anhand mehrerer in den Zeichnungen dargestellter Ausführungsbeispiele näher erläutert; dabei zeigen:
- Fig. 1a: eine schematische Darstellung einer Aufsicht auf ein erfindungsgemäßes Bewegungssystem für einen Fahrsimulator;
- Fig. 1b: eine Seitenansicht des Bewegungssystems der Fig. 1a;
- Fig. 2a: eine schematische Darstellung der Basiseinheit des Bewegungssystems in der Seitenansicht der Figur 1b;
- Fig. 2b: die Luftlagerung der Basiseinheit in einer schematischen Schnittdarstellung;
- Fig. 3: eine Seitenansicht des Bewegungssystems der Fig. 1a mit Bandantrieb der Portalbrücke;
- Fig. 4: eine Detailansicht eines elektromagnetischen Linearantriebs der Portalbrücke gemäß dem Ausschnitt IV der Figur 2a;
- Fig. 5: eine schematische Darstellung eines Verkantens der Portalbrücke;
- Fig. 6a: eine schematische Darstellung der Anbindung der Basiseinheit an die Portalbrücke mittels Koppelelementen in einer Aufsicht in Z-Richtung;
- Fig. 6b: die Anbindung der Basiseinheit an die Portalbrücke nach Fig. 6a in einer Aufsicht in X-Richtung
- Fig. 7a: eine schematische Aufsicht auf eine mittels Bandantrieben angetriebenen Horizontalverschiebevorrichtung;
- Fig. 7b: eine seitliche Schnittdarstellung der Horizontalverschiebevorrichtung der Figur 7a;
- Fig. 8a: eine schematische Aufsicht auf eine mittels Planarantrieben angetriebene Horizontalverschiebevorrichtung;
- Fig. 8b: eine Detailansicht der Bodenfläche der Fig. 8a;
- Fig. 8c: eine seitliche Schnittdarstellung der Horizontalverschiebevorrichtung mit Planarantrieben nach Figur 8a;
- Fig. 9: eine perspektivische Darstellung eines elektromagnetisch angetriebenen Hexapoden;
- Fig. 10a: eine schematische X-Z-Schnittansicht einer Fahrersitz-Aktorik;
- Fig. 10b: eine schematische X-Y-Schnittansicht der Fahrersitz-Aktorik der Figur 10a.

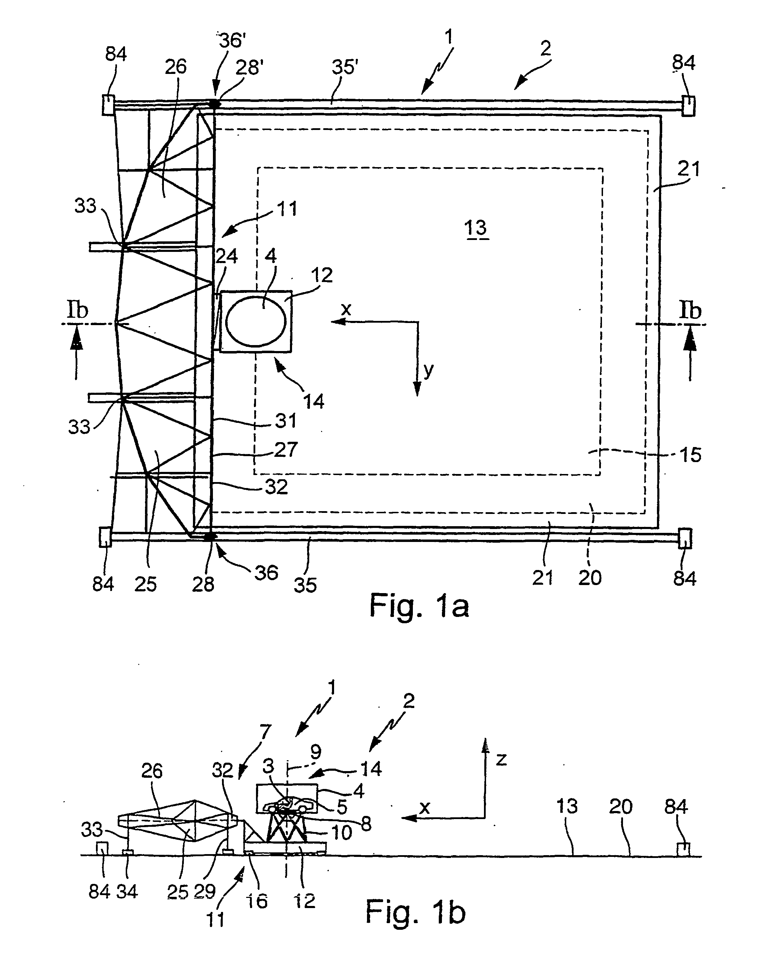

Figuren 1a und 1b zeigen in einer schematischen Darstellung eine Aufsicht (Fig. 1a) und eine Seitenansicht (Fig. 1b) eines Bewegungssystems 1 für einen Fahrsimulator 2 zur Erzeugung von Bewegungseindrücken auf eine Testperson 3. Das Bewegungssystem 1 umfasst eine von einem Dom 4 umgebene Kabine 5 mit einer (unten näher beschriebenen) "Ride-Aktorik" 6. Die Kabine 5 ist ortsfest auf einem Manipulator 7 angeordnet, welcher seinerseits die folgenden Komponenten umfasst:
- einen Drehteller 8, mittels dessen die Kabine 5 um ihre Vertikalachse 9 gedreht werden kann;
- eine sechsachsige Bewegungseinheit 10 zur Bewegung des Zusammenbaus aus Drehteller 8 und Kabine 5 in allen sechs Raumfreiheitsgraden (drei translatorische Freiheitsgrade und drei rotatorische Freiheitsgrade);
- eine Horizontalverschiebevorrichtung 11 zur gesteuerten Verschiebung und Beschleunigung des Zusammenbaus aus sechsachsiger Bewegungseinheit 10, Drehteller 8 und Kabine 5 entlang der beiden Horizontalachsen X und Y.

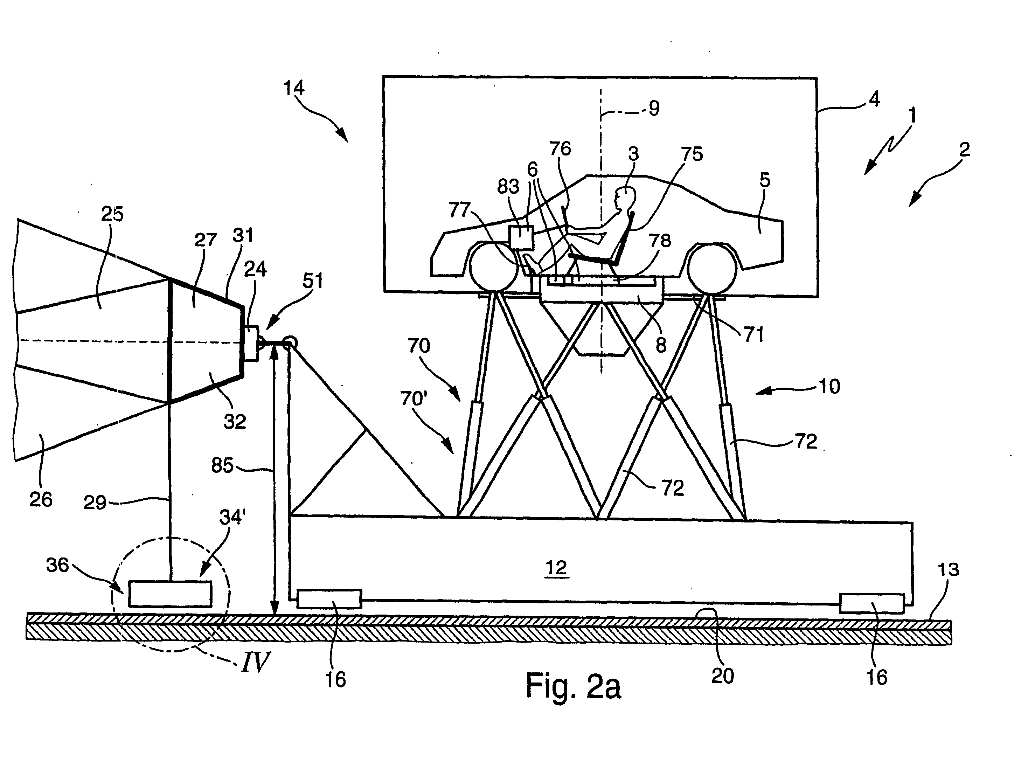

Die sechsachsige Bewegungseinheit 10 ist auf einem Trägerschlitten 12 montiert, der frei verschieblich auf einer ebenen Bodenfläche 13 gelagert ist und mittels der Horizontalverschiebevorrichtung 11 über diese Bodenfläche 13 gezogen und/oder geschoben wird. Der Zusammenbau aus Trägerschlitten 12, sechsachsiger Bewegungseinheit 10, Drehteller 8 und Kabine 5 wird im folgenden als Basiseinheit 14 bezeichnet. Figur 2a zeigt eine Detaildarstellung dieser Basiseinheit 14 in einer schematischen Schnittansicht.

Ziel ist es, mit Hilfe des Fahrsimulators 2 eine Vielzahl möglicher Fahrmanöver realitätsnah darzustellen; die hierfür notwendigen Geschwindigkeiten und Beschleunigungen müssen durch das Bewegungssystem 1 aufgebracht werden. So werden insbesondere zur Darstellung niedrigfrequenter Anregungen große Bewegungsräume benötigt. Im vorliegenden Beispiel wurde in Horizontalrichtung (X- und Y-Richtung) ein X-Y-Bewegungsraum 15 von 40 m x 40 m gewählt (dessen äußere Begrenzung in Figur 1a gestrichelt dargestellt ist). Simulationen zeigen, dass mit einem Bewegungsraum dieses Ausmaßes ein Großteil der in der Fahrzeugentwicklung relevanten Manöver überzeugend simuliert werden können. Hierbei wird der Frequenzbereich < 1 Hz in X- und Y-Richtung durch die Horizontalverschiebevorrichtung 11 und den Drehteller 8 abgedeckt. Die Bewegungen im Frequenzbereich zwischen etwa 1 Hz und etwa 3 Hz werden durch die sechsachsige Bewegungseinheit 10 realisiert, während alle höherfrequenten Anregungen durch die "Ride-Aktorik" 6 und den Drehteller 8 abgedeckt werden. - Allerdings stellen die großen Ausmaße des X-Y-Bewegungsraums 15 sehr hohe Anforderungen an sämtliche Komponenten der Bewegungseinheit 1, so dass - wie im folgenden beschrieben - sowohl die Ausgestaltung der Einzelkomponenten als auch ihr Zusammenwirken gezielt auf die Größe des X-Y-Bewegungsraumes 15 abgestimmt werden muss.

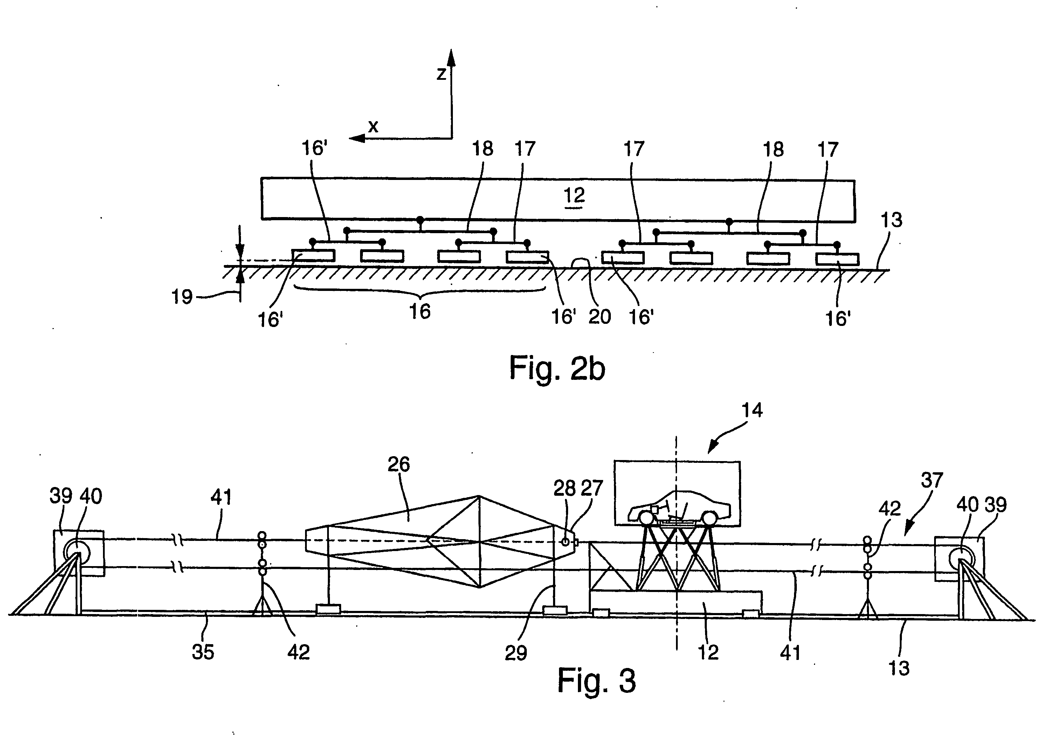

Um die für die unterschiedlichen Manöver benötigten Geschwindigkeiten und Beschleunigungen in hoher Auflösung und Güte aufbringen zu können, muss die - mehrere Tonnen schwere - Basiseinheit 14 möglichst reibungsarm gegenüber der Bodenfläche 13 gelagert werden. Dies wird im Ausführungsbeispiel der Figuren 1 und 2 durch eine Luftlagerung 16 des Trägerschlittens 12 gegenüber der Bodenfläche 13 realisiert; dies ist in Figur 2b schematisch in einer Detaildarstellung abgebildet: Zur Abstützung des Trägerschlittens 12 gegenüber der Bodenfläche 13 werden 27 gleiche Luftlager 16' verwendet, die - wie in Figur 2b schematisch dargestellt - in drei Hauptgruppen 18 jeweils drei Untergruppen 17 mit drei Einzellagern enthalten. Dabei sind jeweils drei Einzellager 16' über Kugelgelenke mit einem Träger verbunden und bilden so eine Untergruppe 17. Drei Untergruppen 17 sind wiederum jeweils über Kugelgelenke mit einem weiteren Träger verbunden und bilden so eine Hauptgruppe 18. Jede Hauptgruppe 18 wiederum ist jeweils über ein Kugelgelenk mit dem Trägerschlitten 12 verbunden. So entsteht eine statisch bestimmte Lagerung des Trägerschlittens 12 auf der Bodenfläche 13. - Weiterhin muss die Bodenfläche 13 als ein sehr ebenflächiger Gleitboden 20 ausgestaltet sein.

Die Horizontalverschiebevorrichtung 11 besteht im Ausführungsbeispiel der Figuren 1 und 2 aus zwei Linearverschiebevorrichtungen 24,25. Mit Hilfe der ersten Linearverschiebevorrichtung 24 wird die Basiseinheit 14 in Y-Richtung verschoben und beschleunigt. Mit Hilfe der zweiten Linearverschiebevorrichtung 25 wird der Zusammenbau aus Basiseinheit 14 und erster Linearverschiebevorrichtung 24 entlang der X-Richtung verschoben und beschleunigt.

Die zweite Linearverschiebevorrichtung 25 ist in dem Ausführungsbeispielen der Figuren 1 und 2 als Portalbrücke 26 ausgestaltet. Die Portalbrücke 26 umfasst eine Traverse 27, deren beide Enden 28,28' auf verschieblich gegenüber der Bodenfläche 13 gelagerten Füßen 29 ruhen. Die Traverse 27 überspannt den gesamten Gleitboden 20 in Y-Richtung und überspannt somit eine Strecke von 54 m Länge, die sich aus der Bewegungsstrecke 30 in Y-Richtung (40 m), Notauslaufzonen 21 (zweimal 3 m), sowie der Breite des Trägerschlittens 12 (8 m) zusammensetzt.

Die Traverse 27 ist eine Leichtbaukonstruktion aus Stahl und/oder CFK und ist so ausgelegt, dass sie bei geringem Gewicht möglichst hohe Eigenfrequenzen hat; dies ist wichtig, um während des Betriebs des Fahrsimulators 2 die Anregung von Eigenschwingungen der Traverse 27 zu vermeiden, welche die Bewegungsdarstellung des Simulationssystems ungünstig beeinflussen. Der niedrigstfrequente und daher relevante Eigenmode der Portalbrücke 26 ist die erste Biegeschwingung der Traverse 27 um die Vertikal-(Z-)Achse. Um sicherstellen zu können, dass diese Eigenfrequenz im Betrieb des Fahrsimulators 2 nicht angeregt wird, muss die Eigenfrequenz so hoch sein, dass alle im Betrieb auftretenden Bewegungsformen der Horizontalverschiebevorrichtung 11 (mit < 1 Hz) und der sechsachsigen Bewegungseinheit 10 (mit bis zu 3 Hz) genügend weit unterhalb der Eigenfrequenz liegen. Daraus folgt, dass die Traverse 27 in dieser Schwingungsform eine erste Eigenfrequenz von genügend weit oberhalb 3 Hz erreichen sollte, wobei gleichzeitig die Masse der Struktur 26 nicht über 40 t liegen darf.

Diese Anforderungen sind z.B. mit einer Fachwerkstruktur aus Stahl erfüllbar. Die Traverse 27 muss dabei in dem der Basiseinheit 14 zugewandten Bereich 31, in dem die erste Linearverschiebevorrichtung 24 angebunden ist und in dem die Kräfte in die Basiseinheit 14 eingeleitet werden, eine hohe lokale Steifigkeit aufweisen. Dieser Bereich 31 ist daher im Ausführungsbeispiel der Figuren 1 und 2 durch eine Schalenstruktur 32 aus verschweißten Stahlblechen gebildet. Die übrige Struktur der Traverse 27 ist als überbestimmtes Fachwerk aufgebaut. Die Stäbe bzw. Balken haben Rundrohr- oder Vierkantrohr-Querschnitte und sind kraft- und/oder formschlüssig miteinander verbunden. Um die geforderte Steifigkeit bezüglich Biegungen zu erreichen, ist es zweckmäßig, eine mehrstufige Fachwerkstruktur vorzusehen: dabei wird die Schalenstruktur 32 durch eine dahinter angeordnete ca. 2 bis 3 m tiefe Fachwerk-Feinstruktur ausgesteift; die globale Steifigkeit der Struktur wird durch ein weiteres hinterlagertes Fachwerk mit bis zu 13 m nach hinten verlagerten Gurten erzielt.

Zur Verringerung der Durchbiegung unter Eigengewicht bei gleichzeitiger Minimierung des Bauraumbedarfes in Vertikal-(Z-)Richtung ist die Portalbrücke 26 über mehrere in Y-Richtung verteilte Stützen 33 gegenüber der Bodenfläche 13 abgestützt. Die Stützen 33 sind über Luftlager 34 oder Luftgleitkissen-Elemente gegenüber der Bodenfläche 13 gelagert, um eine reibungsarme Verschiebbarkeit der Portalbrücke 26 in X-Richtung sicherzustellen. Die Position und Steifigkeit der Stützen 33 werden nach schwingungstechnischen Gesichtspunkten bestimmt.

Um in Y-Richtung eine statisch bestimmte Lagerung der Portalbrücke 26 zu gewährleisten, sind beidseitig Führungen 35,35' vorgesehen, wobei die Portalbrücke 26 auf der einen Seite über ein Festlager und auf der anderen Seite über ein Loslager gegenüber der Führung 35,35' gelagert ist. In den Lagern werden keine Momente um die Vertikal- (Z-)Achse aufgenommen, so dass bei Biegung der Portalbrücke 26 und/oder bei leichter Schrägstellung keine Klemmung auftritt.

Zur gesteuerten Bewegung der Portalbrücke 26 in X-Richtung dienen zwei Antriebe 36,36' die an den beiden Enden 28,28' der Portalbrücke 26 angreifen. Bei der Auswahl geeigneter Antriebe 36,36' für die Portalbrücke 26 sind dabei grundsätzlich die folgenden Randbedingungen zu berücksichtigen:
- Der Bewegungsraum der Portalbrücke 26 und somit der erforderliche Arbeitsraum der Antriebe 36,36' ergibt sich aus den Abmaßen der Bodenfläche 13 und ist daher sehr groß (er umfasst im hier betrachteten Ausführungsbeispiel - wie oben beschrieben - 54 m).
- Die maximal benötigte Antriebskraft für die Portalbrücke 26 in X-Richtung beträgt etwa 300 000 N. Dies ergibt sich aus der für extreme Fahrmanöver geforderten Beschleunigung von 0.6 g und der zulässigen bewegten Gesamtmasse des Zusammenbaus aus Portalbrücke 26 und Basiseinheit 14 von bis zu 50 t. Bei der Dimensionierung der beiden Einzelantriebe 36,36' ist dabei eine extreme Randposition der Basiseinheit 14 zu berücksichtigen. Diese führt zu Schwankungen im Kraftbedarf der Einzelantriebe 36,36' von bis zu +-20%.
   Jeder Einzelantrieb 36,36' muss somit eine maximale Kraft von 180.000 N aufbringen.
- Aus Simulationsrechnungen mit entsprechenden Lastprofilen ergibt sich eine geforderte Antriebsleistung von 20 W/kg in X-Richtung.
- Die für eine realitätsnahe Simulation ausgewählter Fahrmanöver geforderte Beschleunigungsauflösung bzw. Beschleunigungsquantisierung liegt bei 0.02 m/s². Daraus ergibt sich, dass die Antriebskraft der Portalbrücke 26 feiner als 1000 N dosierbar sein muss. Außerdem müssen konzeptbedingte Störkräfte (z.B. Reibung) kleiner als 5000 N sein, um sicherzustellen, dass Fehler in der Beschleunigungsdarstellung kleiner als 0.1 m/s² sind.

Zur Erfüllung dieser Anforderungen wird gemäß einem ersten Ausführungsbeispiel ein Bandantrieb 37 zum Antrieb der Portalbrücke 26 verwendet (siehe schematische Darstellung der Figur 3): An den äußeren Enden 38 der Führungen 35,35' der Portalbrücke 26 werden Elektromotoren 39 installiert, die über Rollen 40 ein umlaufendes vorgespanntes Endlosstahlband 41 reibkraftschlüssig antreiben. Dieses Stahlband 41 ist an den Enden 28,28' der Traverse 27 der Portalbrücke 26 befestigt. - Aufgrund der großen freien Länge des Stahlbandes 41 können Eigenschwingungen des Bandes 41 auftreten, welche im Bereich der Regelbandbreite des Antriebs 37 liegen und negative Auswirkungen auf die Bewegungsdarstellung des Simulationssystems 2 haben. Um solche Effekte zu vermeiden, ist es vorteilhaft, das Stahlband 41 vorzuspannen und entlang der Portalbrückenführung 35 zusätzliche Abstützungsmechanismen 42 vorzusehen, um niedrigfrequente Eigenschwingungen der Stahlbänder 41 zu verhindern. Zwischen Motor 39 und Rolle 40 kann ein weiterhin ein Übersetzungsgetriebe vorgesehen werden.

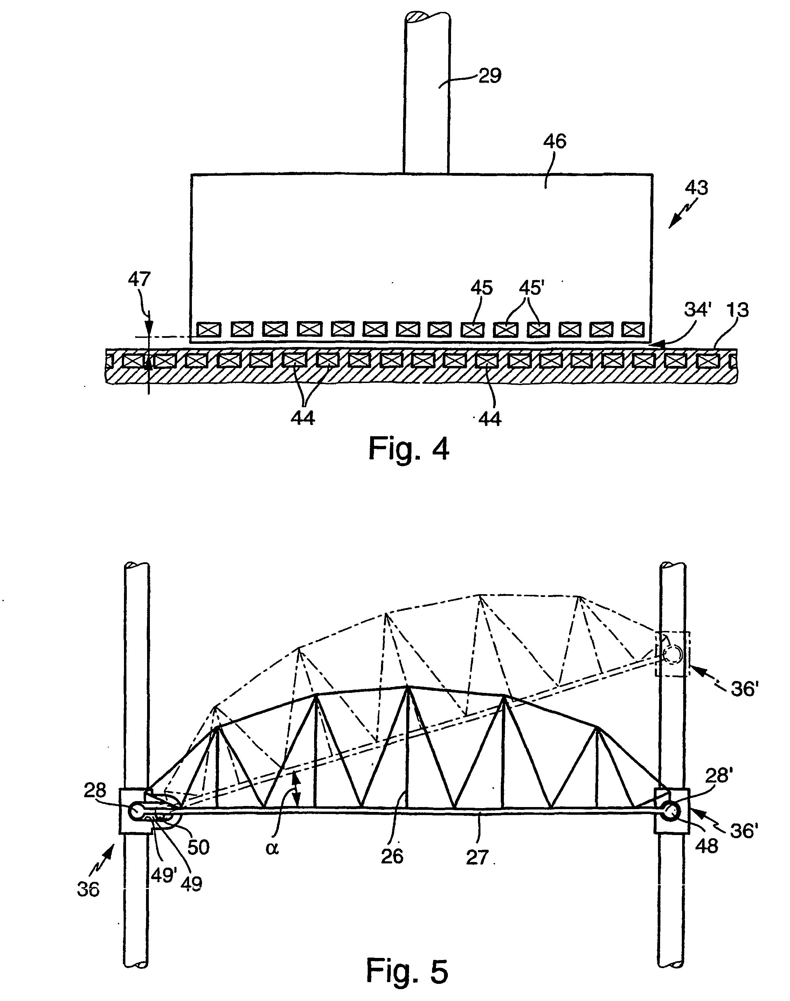

Alternativ zu den Bandantrieben 37 werden in einem zweiten Ausführungsbeispiel elektromagnetische Linearantriebe 43 zum Antrieb der Portalbrücke 26 verwendet (siehe schematische Darstellung der Figur 4 als Detailansicht des Fußes 29 der Portalbrücke 26 in Figur 2a). Das Funktionsprinzip dieser Antriebe 43 entspricht einem "abgewickelten" Elektromotor. Elektromagnetische Linearantriebe 43 haben gegenüber Bandantrieben 37 den wesentlichen Vorteil der berührungslosen Kraftübertragung und kommen im Gegensatz zu den Bandantrieben 37 ohne den Einsatz von mechanisch bewegten Kraftübertragunggliedern oder Getrieben aus. Dadurch wird zum einen die Güte der Bewegungsdarstellung verbessert, da die Reibung im System - insbesondere beim Einsatz von Luftlagern 34' als Trag- und Führungselemente - minimal wird. Zum anderen steigt die Verfügbarkeit, da keine verschleißanfälligen Komponenten (wie z.B. Getriebe oder Stahlbänder) vorhanden sind, die häufige Wartungsintervalle erforderlich machen.

Als elektrische Linearantriebe 43 können - ebenso wie bei herkömmlichen rotatorischen Elektromotoren - sowohl Ansynchronantriebe als auch Synchronantriebe zum Einsatz kommen:

Das Funktionsprinzip des Asynchronmotors beruht auf aktiven Primärspulen 44, mit deren Hilfe ein Wechselfeld erzeugt wird, das wiederum in passiven Sekundärspulen 45 einen Strom induziert. Auf die stromdurchflossenen Leiter der Sekundärspule 45 wirkt nach der "Lenzschen Regel" eine Kraft die beim Weiterschalten des Feldes durch die Primärspulen 44 Vortriebskräfte bewirkt. Grundsätzlich können sowohl die Primärals auch die Sekundärspulen 44,45 in den "bewegten" Teil des Motors - den Läufer 46 - eingebaut werden.

Asynchronmotoren arbeiten grundsätzlich mit Schlupf, d.h. die resultierende Kraft ist eine Funktion der Relativgeschwindigkeit zwischen Feld und Läufer 46. Bei kleinen Relativgeschwindigkeiten ist die Feldänderungsgeschwindigkeit in den Sekundärspulen 45 und somit der induzierte Strom geringer, d.h. die erzeugten Kräfte sind klein. Mit zunehmendem Schlupf werden die Kräfte größer. Ein zweiter wichtiger Einflußfaktor für die Größe der erzeugten Kräfte ist die Höhe des "magnetischen Luftspalts" 47 zwischen Primär- und Sekundärspulen 44,45: Die Stärke der induzierten Ströme und somit die resultierende Kraft hängt direkt proportional von der Stärke des Primärspulenfeldes ab. Dessen Feldstärke nimmt wiederum mit dem Quadrat der Höhe des "magmetischen Luftspalts" 47 ab. Der "magnetische Luftspalt" 47 muss daher bei beim Asynchronantrieb relativ klein (typischerweise etwa 0.5 mm) sein, um eine ausreichende Leistungsdichte zu gewährleisten. Dies führt bei einer entsprechenden Auslegung für die Portalbrücke 26 zu vergleichsweise hohen Anforderungen an Maßtoleranzen und Fertigungsgenauigkeit.

Diese Nachteile können bei Verwendung eines Synchronmotors vermieden werden: Im Unterschied zum Asynchronantrieb, bei dem das Gegenfeld in den Sekundärspulen 45 durch Induktion erzeugt wird, ist das Gegenfeld beim Synchronmotor in Form von Permanentmagneten 45' "fest eingebaut". Das von den Primärspulen 44 erzeugte Wechselfeld muss synchron zur Läufergeschwindigkeit weitergeschaltet werden, damit die magnetischen Anziehungs- und Abstoßungskräfte zwischen den Polen der Primärspulen 44 und den Polen der Permanentmagnete 45' zum Antrieb genutzt werden können. Entscheidend für die Größe der Antriebskraft ist der Phasenwinkel zwischen dem Feld der Permanentmagnete 45' und dem Feld der Primärspulen 44. Im Prinzip ist die Kraft des Motors proportional zum Strom durch die Primärspulen 44. Der "magnetische Luftspalt" 47 spielt beim Synchronmotor im Vergleich zum Asynchronmotor eine deutlich geringere Rolle, d.h. Synchronantriebe können bei vergleichbaren Kräften mit deutlich größerem "magnetischen Luftspalt" 47 betrieben werden (typischer Wert: 2 mm). Außerdem ist die Abhängigkeit der Kraft von Luftspaltschwankungen prinzipbedingt gering. Dies ist vor allem auch für die Regelbarkeit im Betrieb und somit für die Dosierbarkeit der Kraft von Vorteil.

Neben dem bisher beschriebenen Antrieb der Portalbrücke 26 mit Hilfe zweier endseitig an der Traverse 27 angeordneter Antriebe 36,36' kann es zweckmäßig sein, weitere Krafteinleitungspunkte entlang der Portalbrücke 26 vorzusehen.

Unabhängig von der Frage, ob zur Bewegung der Portalbrücke 26 Bandantriebe 37 oder elektromagnetische Linearantriebe 43 zum Einsatz kommen, ist es wichtig, die beiden Enden 28 der Traverse 27, an denen die Antriebe 37 bzw. 43 angebunden sind und über die somit die (äußeren) Kräfte in die Portalbrücke 26 eingeleitet werden, parallel und synchron zueinander zu bewegen, um Verkantungen der Portalbrücke 26 zu vermeiden. Daher müssen die Elektromotoren 39 bzw. 43 der Antriebe 37 bzw. 43 synchron angesteuert werden. Um geringe Verkantungen ohne bleibende Schädigungen der Portalbrücke 26 zulassen zu können, ist die Traverse 27 der Portalbrücke 26 an ihrem einen Ende 28' über ein Drehgelenk 48 gegenüber dem Antrieb 36' gelagert, an ihrem anderen Ende 28 ist sie frei bzw. - um Längskräfte übertragen zu können - gegenüber dem Antrieb 36 über ein begrenzt linear in Y-Richtung verschiebliches Drehgelenk 49 geführt. (In Figur 5, die eine Verkantung der Portalbrücke 26 schematisch und stark überhöht darstellt, ist diese Drehverbindung 49 als Langloch 49' ausgeführt.) Bei Antriebsausfall oder einer fehlerhaften Synchronisierung der beiden Antriebe 36,36' können somit Verkantungen der Portalbrücke 26 in X-Y-Richtung ausgeglichen werden. Allerdings besteht bei einer solchen winkeltoleranten Lagerung der Traverse 27 die Gefahr einer großräumigen unkontrollierten Winkelauslenkung der Portalbrücke 26 in Form einer Pendelbewegung. Zur Überwachung der Winkelauslenkung ist daher ein Schalter 50 innerhalb des verschieblichen Drehgelenks 49 vorgesehen, der beim Überschreiten eines zulässigen maximalen Pendelwinkels α (z.B. von 1 Grad) eine sofortige Abschaltung der Antriebsmotoren 39 bzw. 43 der Portalbrücke 26 einleitet.

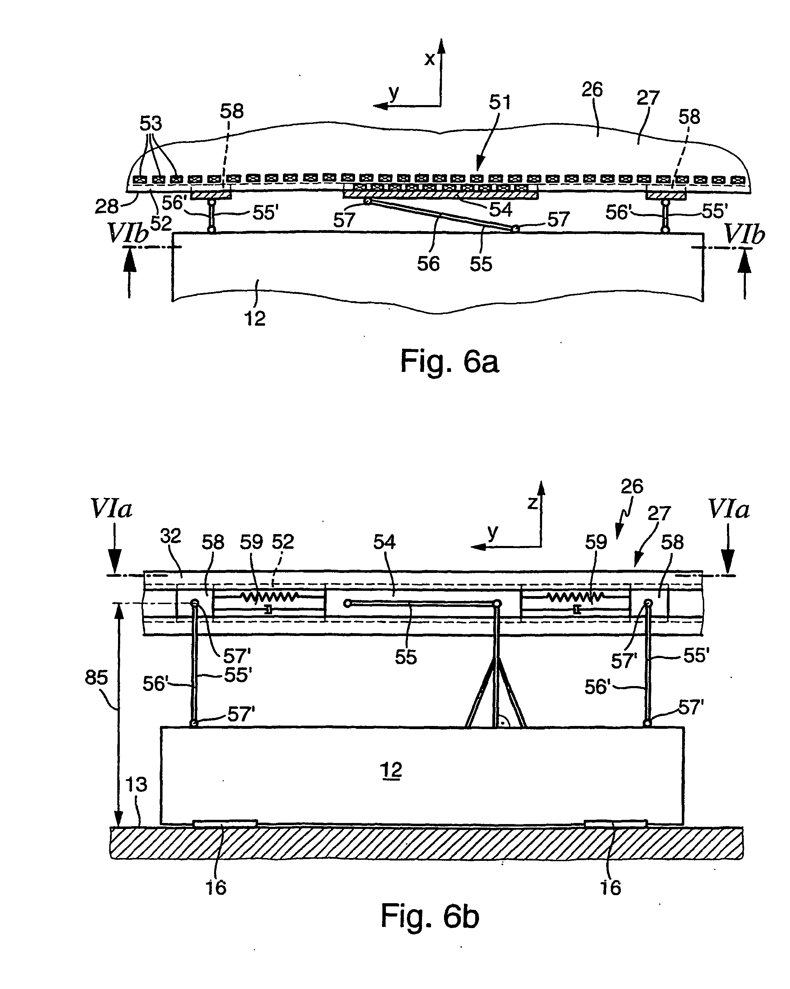

Die erste Linearverschiebeeinheit 24, die der Verschiebung und Beschleunigung der Basiseinheit 14 in Y-Richtung dient, ist - wie z.B. aus Figur 2a ersichtlich - in dem der Basiseinheit 14 zugewandten Bereich 28 der Portalbrücke 26 befestigt, in dem die Traverse 27 - wie oben ausgeführt eine Schalenstruktur 32 aufweist und daher eine besonders hohe Steifigkeit hat. Der Antrieb der ersten Linearverschiebeeinheit 24 erfolgt vorzugsweise mit Hilfe eines elektrischen Linearantriebs 51. Zur Führung des Trägerschlittens 12 gegenüber der Portalbrücke 26 ist im Bereich der Schalenstruktur 32 eine entlang der Y-Richtung ausgerichtete Schiene 52 vorgesehen, in welche zweckmäßigerweise der Stator 53 des elektrischen Linearantriebs 51 integriert ist; dies ist schematisch in Figur 6a in einer Aufsicht in Z-Richtung und in Figur 6b in einer Aufsicht in X-Richtung dargestellt. Der Läufer 54 des elektrischen Linearantriebs 51 ist über ein zentrales Koppelelement 55 am Trägerschlitten 12 befestigt. Das Koppelelement 55 umfasst eine Stange 56, welche über Drehgelenke 57 an den Läufer 54 und an den Trägerschlitten 12 gekoppelt ist. Um Dreh- und/oder Rotationsbewegungen der Basiseinheit 14 um die vertikale (Z-)Achse zu unterbinden, ist auf beiden Seiten des zentralen Koppelelements 55 je ein weiteres seitliches Koppelelement 55' vorgesehen. Die Stangen 56' dieser seitlichen Koppelelemente 55' sind mit einem Ende über Drehgelenke 57' am Trägerschlitten 12 befestigt und mit dem anderen Ende über weitere Drehgelenke 57' an Stützelementen 58 befestigt, welche verschieblich in der Schiene 52 geführt werden und über Feder-Dämpfer-Elemente 59 an den Läufer 54 angebunden sind. Die seitens der Antriebe 34,34' und 51 in die Portalbrücke 26 und die erste Linearverschiebeeinrichtung 24 eingebrachten Kräfte werden somit über die Koppelelemente 55,55' an den Trägerschlitten 12 weitergeleitet, um Bewegungen der Basiseinheit 14 in der Horizontalebene (X-Y-Ebene) zu erzeugen. Das zentrale Koppelelement 55 stellt dabei eine starre Verbindung zwischen Läufer 54 und Trägerschlitten 12 in Y-Richtung dar dient damit der Kraftanbindung der Basiseinheit 14 in Y-Richtung. Die beiden seitlichen Koppelelemente 55' nehmen die Kräfte in X-Richtung und das Reaktionsmoment der Basiseinheit 14 um die Z-Achse.bei Y-Bewegung der Basiseinheit 14 oder bei Drehungen des Drehtellers 8 auf.

Die Schiene 52 ist auf eine Höhe 85 gegenüber der Basisfläche 13 angeordnet, die der Höhe des Schwerpunkts der zweiten Linearverschiebeeinrichtung 25 entspricht und gleichzeitig der Höhe des Arbeitspunkts der Basiseinheit 14 (d.h. des Schwerpunkts der Basiseinheit 14 in Normalstellung) entspricht. Somit ist die Basiseinheit 14 in der Höhe 85 ihres Arbeitspunkts an die Horizontalverschiebeeinheit 11 angekoppelt, so dass zwischen Basiseinheit 14 und Horizontalverschiebeeinheit 11 keine Momente aufgrund von X- und Y-Kräften auftreten. Das hat zur Folge, dass die Lager 16 des Trägerschlittens 12 zwar die statische Abstützung der Basiseinheit 14 sowie die Abstützung der dynamischen Kräfte in Vertikalrichtung leisten müssen, dass sie aber keine (zusätzlichen) Momente aus den X-Y-Kräften abzustützen brauchen. Weiterhin ist bei dieser Art der Ankopplung der Basiseinheit 14 an die Horizontalverschiebeeinheit 11 ein Kippen der Basiseinheit 14 aufgrund von Antriebs- und Bremskräften ausgeschlossen.

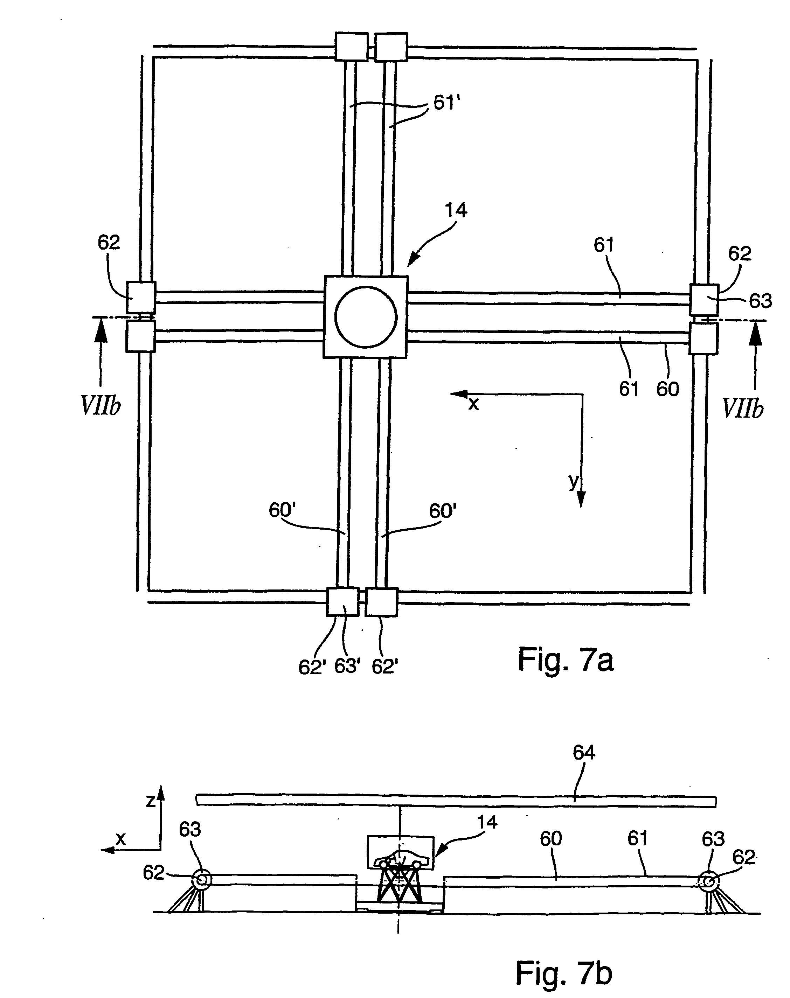

Alternativ zur oben beschriebenen kaskadierten Ausführungsform der Horizontalverschiebevorrichtung 11 mit einer ersten Linearverschiebevorrichtung 24, welche auf einer zweiten Linearverschiebevorrichtung 25 montiert ist und mit deren Hilfe bewegt wird, kann die Horizontalverschiebevorrichtung 11 auch durch eine Bandzug-Bauweise realisiert werden, bei der die X- und die Y-Bewegungen mittels identischer Bandzugantriebe 60,60' ausgeführt werden; dies ist schematisch in Figuren 7a und 7b dargestellt.

Hierzu werden zwei Paar über Kreuz laufende Stahlbänder 61,61' eingesetzt, die beidseitig am Trägerschlitten 12 angreifen, vorgespannt sind und an den Enden des X-Y-Bewegungsraumes 15 jeweils ein Paar von Trommeln 62,62' umlaufen. Der Antrieb erfolgt durch Elektromotoren 63,63' an den Trommeln 62,62'. Um die Stahlbänder 61,61' jeweils in der korrekten Lage zueinander zu halten, müssen die Trommeln 62,62' und die damit verbundenen Elektromotoren 63,63' synchron und parallel mit dem Trägerschlitten 12 mitbewegt werden. Die Energiezuleitung an die Basiseinheit 14 erfolgt mit Hilfe eines beweglichen Portalkrans 64, der sich oberhalb des Trägerschlittens 12 befindet und synchron zu der Basiseinheit 14 mitbewegt wird.

Die in Figuren 7a und 7b gezeigte Realisierung der Horizontalverschiebevorrichtung 11 in Bandzug-Bauweise hat gegenüber der kaskadierten Bauweise der Figur 1 den Vorteil der Minimierung der mit hoher Güte zu bewegenden Massen. Kritisch an der Bandzug-Bauweise sind allerdings Resonanzerscheinungen der Bänder 61,61', die insbesondere durch zeitlich variierende Zugkräfte aus den Antriebsmotoren 63,63' oder aus der sechsachsigen Bewegungseinheit 10 angeregt werden können. Die Resonanzfrequenz der Stahlbänder 61,61' hängt dabei von der Vorspannung, der Materialdichte und der freien Länge ab; diese Parameter müssen so eingestellt werden, dass die Eigenfrequenzen der Stahlbänder 61,61' in allen Fällen oberhalb der Betriebsfrequenzen der Horizontalverschiebevorrichtung 11 (< 1 Hz) und der sechsarmigen Bewegungseinheit 10 (bis zu 3 Hz) liegen. Im Vergleich zur Portal-Bauweise der Figuren 1a und 1b handelt es sich bei der Bandzug-Bauweise der Figuren 7a und 7b um ein komplexeres System, da eine Vielzahl unterschiedlicher Einheiten (je vier Antriebsmotoren 63 und 63', Antriebe des Portalkrans 64 zur Energieversorgung etc.) synchron zueinander angetrieben werden müssen.

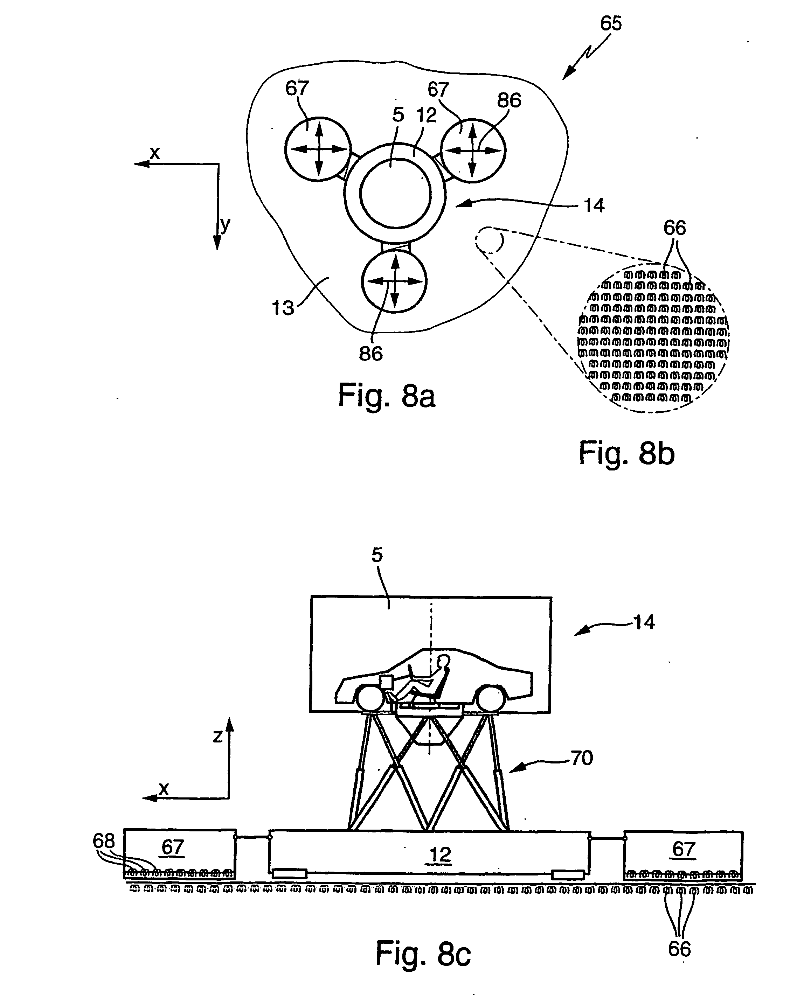

In einem weiteren Ausführungsbeispiel (siehe Figuren 8a bis 8c) ist die Horizontalverschiebevorrichtung als ein elektromagnetischer Planarantrieb 65 ausgestaltet. In diesem Fall ist in der Bodenfläche 13 ein zweidimensionales Raster von Primärspulen 66 vorgesehen (wie in der Detailansicht der Aufsicht auf die Bodenfläche in Figur 8b dargestellt), mit Hilfe derer Wechselfelder in X- und Y-Richtung erzeugt werden können. Zur Bewegungsanregung der Basiseinheit 14 sind mehrere "Schuhe" 67 vorgesehen, welche in ihrem Inneren Sekundärspulen (oder Permanentmagnete) 68 tragen und gegenüber der Bodenfläche 13 reibungsarm (z.B. über Luftlager) gelagert sind. Beim Weiterschalten der Felder durch die Primärspulen 66 werden in den Sekundärspulen (bzw. Permanentmagneten) 68 Vorschubkräfte gemäß der Pfeile 86 in Figur 8a erzeugt. Im Prinzip kann der Planarantrieb 65 - analog zu den oben beschriebenen elektromagnetischen Linearantrieben 43 der Portalbrücke 26 - als Synchron- oder als Asynchronantrieb ausgebildet sein (mit den damit verbundenen Vor- und Nachteilen). Die "Schuhe" 67 werden synchron zueinander bewegt und sind über Koppelelemente 69 an den Trägerschlitten 12 der luftgelagerten Basiseinheit 14 angebunden. Um die seitens der Basiseinheit 14 auf die "Schuhe" 67 ausgeübten Reaktionskräfte vorteilhaft kompensieren zu können, sollten die "Schuhe" 67 in einer symmetrischen (z.B. dreieckigen oder quadratischen) Konfiguration gegenüber dem Trägerschlitten 12 angeordnet sein.

Die sechsachsige Bewegungseinheit 10 ist in den bisher betrachteten Ausführungsbeispiel (siehe z.B. Figur 2a) als Hexapod 70 ausgestaltet und dient zur Darstellung der Hub-, Wank- und Nickbewegung im Frequenzbereich bis mindestens 3 Hz und zur Darstellung der X- und Y-Bewegung im Frequenzband von circa 1 Hz bis mindestens 3 Hz. Die Gierbewegung wird von dem auf der Bewegungsplattform 71 des Hexapods 70 angeordneten Drehteller 8 übernommen. Die Reaktionsmomente aus der Gierbewegung müssen vom Hexapod 70 aufgenommen und an den Trägerschlitten 12 weitergeleitet werden.

Als Hexapod 70 kann entweder ein hydraulischer betriebener oder ein elektrisch betriebener Hexapod 70', 70" zum Einsatz kommen. Ein hydraulisch betriebener Hexapod 70' hat gegenüber einem elektrisch betriebenen Hexapod 70" den Vorteil einer hohen Energiedichte. Um große Längen und hohe Winkel darstellen zu können, werden als Hydraulikzylinder 72 vorzugsweise Differentialzylinder mit Sonderventil (angepasst die Flächenverhältnisse des Zylinders) eingesetzt. Das Eigengewicht des Hexapoden 70' beträgt knapp 2.5 t; zusätzlich müssen auf der Horizontalverschiebevorrichtung 11 Versorgungsschläuche von und zum Aggregat (in Figur 2a nicht dargestellt) mit einem Leergewicht von knapp 2 t berücksichtigt werden. Alternativ kann das Aggregat auf dem Trägerschlitten 12 mitbewegt werden; in diesem Fall entfallen die Schläuche auf der Horizontalverschiebevorrichtung 11, allerdings erhöht sich das Gewicht auf dem Trägerschlitten 12 um etwa 3 t.

Alternativ kann ein elektrisch betriebener Hexapod 70" verwendet werden, welcher gegenüber dem hydraulisch betriebenen Hexapod 70' eine höhere Dynamik aufweist. Bei Verwendung eines elektrisch betriebenen Hexapods 70" kann die bewegte Masse gegenüber dem hydraulischen Hexapod 70' halbiert werden; weiterhin kann auch der Leistungsbedarf des Hexapods 70 gegenüber der hydraulischen Variante halbiert werden.

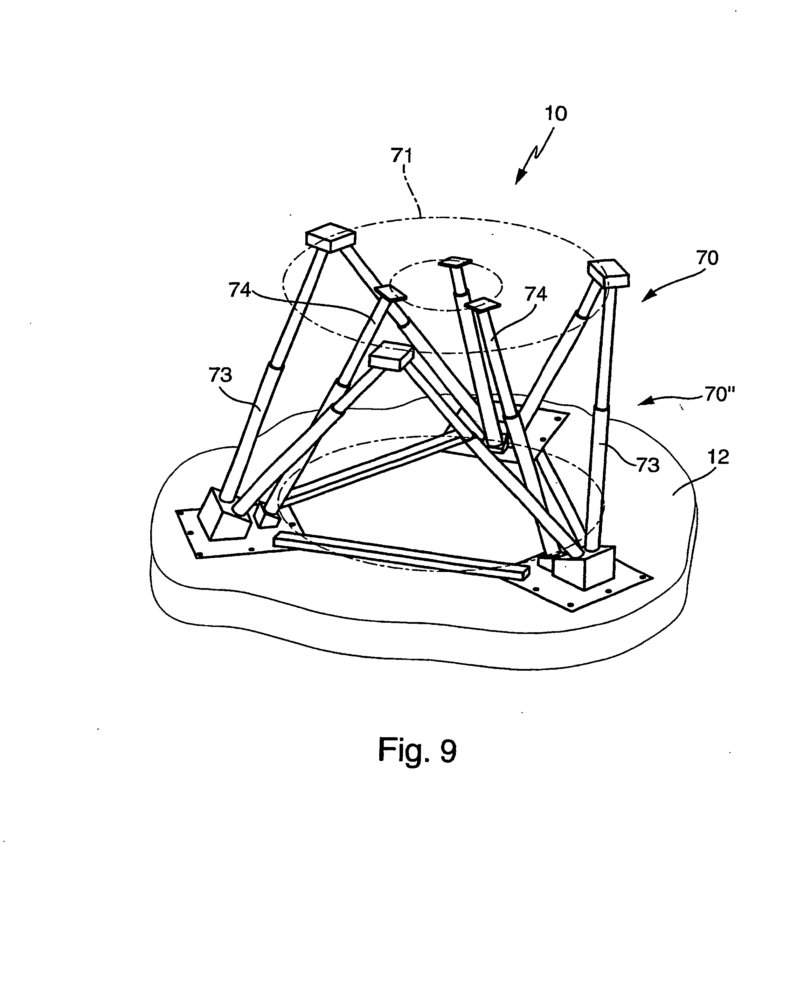

Ein Beispiel eines für diese Anwendung geeigneten elektrischen Hexapods 70" ist in Figur 9 dargestellt; er umfasst sechs elektromagnetische Aktoren 73, die oben an der Bewegungsplattform 71 und unten am Trägerschlitten 12 befestigt sind. Die Aktoren 73 sind mit (in Figur 9 nicht dargestellten) mechanischen Bremsen versehen, welche aktiv über eine Magnetkupplung geöffnet werden; außerdem sind sie mit als Dämpfer wirkenden (in Figur 9 ebenfalls nicht dargestellten) elektrischen Bremsen in Form der über Widerstände kurz geschlossenen Antriebs-Elektromotoren ausgestattet. Dadurch ist es möglich, den Hexapod 70" bei Bedarf automatisch zum Stillstand zu bringen und dabei in der aktuellen Lage einzufrieren, um eine Bewegung des Hexapods 70" aufgrund der Bewegung der Horizontalverschiebevorrichtung 11 zu vermeiden.

Für die Abstützung der statischen Grundläst sind zusätzlich drei Pneumatik-Zylinder 74 vorgesehen. Diese geometrische Konfiguration stellt sicher, dass sich der Hexapod 70" bei Stillstand der Horizontalverschiebevorrichtung 11, kurzgeschlossenen Aktoren 73 und abgeschalteter Pneumatik 74 sowie gelösten Bremsen in fast allen Fällen automatisch in eine ebene stabile Lage absenkt. Alternativ zu der tetraederähnlichen Anordnung der Pneumatik-Zylinder 74 in Figur 9 können auch sechs parallel zu den Aktoren 73 angeordnete Pneumatik-Zylinder eingesetzt werden.

Das Gesamtgewicht des elektrisch betriebenen Hexapods 12 - samt zugehöriger Elektronik und Pneumatik - liegt bei knapp 3 t; die Nutzlast liegt bei 3.5 t. Zu Ansteuerung der elektrischen Aktoren 74 erfolgt mit Hilfe eines PC-basierten Echtzeitrechners über sechs digitale Verstärker. Weiterhin wird ein Druckspeicher mit etwa 300 1 Volumen und einem Drück von 8 bar benötigt.

Wie aus Figur 2a ersichtlich, ist in die Bewegungsplattform 71 des Hexapods 70 ein Drehteller 8 integriert, auf den die Kabine 5 mit der "Ride-Aktorik" 6 montiert ist. Um mit dem Fahrsimulator 1 neuartige Bewegungsdarstellungen (wie z.B. den sogenannten "Zentrifugenmodus") realisieren zu können, ist der Drehteller 8 so ausgelegt, dass er ein freies Drehen der Fahrzeugkabine 5 um beliebig große Winkel gestattet. Die Komponenten der "Ride-Aktorik" 6 sind in der Mitte des Drehtellers 8 in diesen eingelassen; auch die Regelungs- und Steuerungselektronik des "Ride-Systems" 6 ist im Drehteller 8 untergebracht.

Als Antrieb des Drehtellers 8 kann entweder ein Hydromotor mit Untersetzung über ein geeignetes Getriebe, ein ElektroMotor mit Untersetzungs-Getriebe, oder ein direkter elektrischer Antrieb verwendet werden. Die Verwendung eines Hydromotors bietet sich insbesondere dann an, wenn ein hydraulisch betriebenes Hexapod 70' eingesetzt wird; ansonsten ist die Verwendung eines Hydromotors nachteilig, weil er eine eigenständige Druckversorgung nur für die Drehbewegung notwendig macht.

Die Verwendung eines direkten elektrischen Antriebs zur Bewegungsanregung des Drehteller 8 hat den Vorteil, dass dabei vollständig auf mechanische Koppelglieder wie Getriebe oder Zahnriemen verzichtet werden kann, die nicht nur reibungsbehaftet sind, sondern auch einem Verschleiß unterliegen. Der Motor ist vorzugsweise zwischen Bewegungsplattform 71 und Drehteller 8 integriert, so dass der Drehteller 8 den Rotor und der umliegende Bereich der Bewegungsplattform 71 den Stator des Elektromotors bildet.

Auf dem Drehteller 8 ist die Fahrerkabine 5 mit der fahrernahen "Ride-Aktorik" 6 montiert, mit der Fahrzeugschwingungen über 3 Hz dargestellt werden. Solche hochfrequenten Schwingungen nimmt eine Testperson 3 in erster Linie als Vibrationen an seinen haptischen Schnittstellen (Sitz 75, Lenkrad 76, Pedal 77) wahr. Ein Großteil der an die "Ride-Aktorik" 6 gestellten Anforderungen betrifft Schwingungsgrößen, die auf die Fahrersitzkonsole 75 einwirken. Deshalb wird im folgenden ein Bewegungskonzept für den Fahrersitz 75 betrachtet, das dann entsprechend skaliert und modifiziert auch für die anderen ride-relevanten Fahrzeugteile, wie z.B. Lenkrad 76 oder Bodenblech mit Pedalerie 77, appliziert werden.

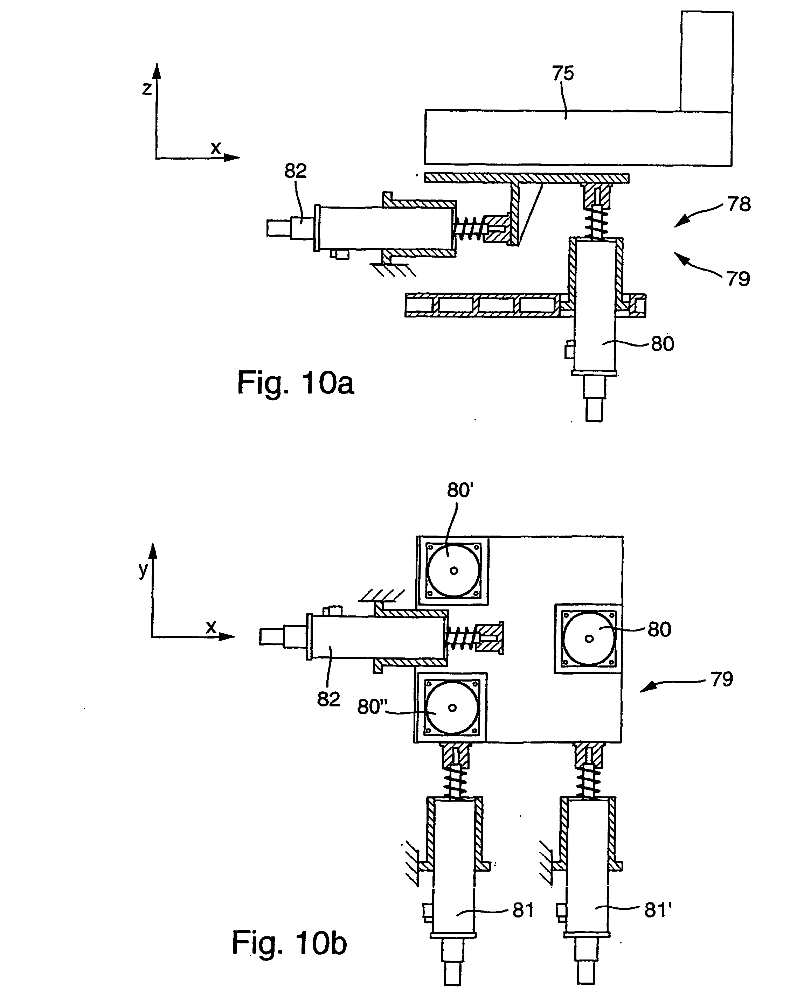

Für die Auslegung einer unter dem Fahrersitz 75 plazierten Aktorik 78 zur realitätsnahen Darstellung von Fahrzeugschwingungen zwischen 3 H₂ und 30 Hz muss zunächst eine geeignete Kinematik ausgewählt werden. Zur Realisierung dieses Frequenzbereiches ist ein kleiner Bewegungsraum von 8 mm x 4 mm x 20 mm ausreichend, für den die Kinematik eines aufgelösten Hexapods 79 vorteilhaft einsetzbar ist. Figuren 10a und 10b zeigen eine vorteilhafte Ausprägung einer solchen Kinematik in einer schematischen X-Z- bzw. einer schematischen X-Y-Schnittansicht. Die Fahrersitzaktorik 78 umfasst drei Aktoren 80,80',80" in Z-, zwei Aktoren 81,81' in Y- und einem Aktor 82 in X-Richtung. Der wesentliche Vorteil der Verwendung einer aufgelösten Hexapodkinematik liegt in der linearen Betrachtung des Gesamtbewegungssystems 79 aufgrund der orthogonalen Anordnung der Aktoren 80-82 und des kleinen Bewegungsraumes. Ein solches System kann mit einer Zustandsregelung auf Einzelaktorebene regelungstechnisch beherrscht und auch im hochfrequenten Bereich in allen Raumrichtungen mit einer ausgezeichneten Performance betrieben werden. - Für die "Ride-Aktorik" 6 werden vorteilhafterweise elektrische Aktoren 80-82 eingesetzt. Jeder Einzelaktor 80-82 ist dabei aus einem elektrischen Antrieb, einer parallel dazu geschalteten Feder und einer geeigneten Lagerung für die Strukturanbindung zusammengesetzt. Die Federn sind notwendig, um die Aktoren 80-82 von statischen Belastungen zu entlasten. Die Dämpfung des Systems wird regelungstechnisch realisiert.

Die Auslegung der Notlaufeigenschaften der "Ride-Aktorik" 6 muss an einem Gesamtmodell des kaskadierten Bewegungssystems 2 erfolgen: Bei einem Ausfall der Energieversorgung werden die elektrischen Antriebe 80-82 über Widerstände kurzgeschlossen, so dass die "Ride-Aktorik" 6 zu einem stark gedämpften Feder-Masse-System wird. Wegen des sehr kleinen Bewegungsraumes sind zusätzlich energieabsorbierende Anschläge vorgesehen. Alternativ bzw. zusätzlich können mechanische Bremsen zur Fixierung der "Ride-Aktorik" 6 eingesetzt werden.

Das Sicherheitskonzept des Gesamt-Bewegungssystems 1 ist so ausgelegt, dass der Testperson 3 im Simulator 2 unter keinen Umständen Schaden zugefügt werden kann. Wesentliches Kriterium ist dabei, dass die wirkenden Beschleunigungen eine bestimmte Schwelle nicht überschreiten, beispielsweise beim Abbremsen der Anlage zum Stillstand aufgrund eines ausgefallenen Aktors. Für den normalen Simulatorbetrieb wird von Beschleunigungen bis maximal 10 m/s² ausgegangen. Weiterhin ist zu gewährleisten, dass der Simulator selbst und seine Umgebung unter keinen Umständen beschädigt werden. Zentraler Punkt hierbei ist das weiche Abbremsen der bewegten Masse ohne Beschädigung irgendwelcher Bauteile wie beispielsweise der Luftlager 16 oder der Bodenfläche 13.

Zentralpunkt des Sicherheitskonzepts ist es, sicherheitskritische Situationen ein zu erkennen das System dann in einen sicheren Zustand zu überführen. Dies kann mehrstufig ausgeführt werden, so dass bei Ausfall eines Teilsystems andere noch funktionierende Teilsysteme genutzt werden können, um sanft in einen sicheren Zustand zu gelangen. Vorausgesetzt wird dabei, dass alle Luftlager 16,34 während der kurzen Zeitspanne bis zum Erreichen des sicheren Zustands bzw. Stillstands des Bewegungssystems 1 ihre volle Tragleistung erbringen, was durch entsprechend ausgelegte Druckspeicher gewährleistet wird. Die Luftlager 16,34 selbst müssen kontinuierlich überwacht werden, um das System 1 bei einem eventuell auftretenden Druckabfall automatisch anhalten zu können.

Im folgenden wird das Sicherheitskonzept am Beispiel eines Komplettausfall des Bewegungssystems 1 - entsprechend der komplette Unterbrechung der Energieversorgung aller Aktoren 6,8,10,11 - betrachtet, bei dem das System 1 automatisch in den sicheren Zustand überführt werden muss.

Am unkritischsten ist dabei der Aktor 83 für das Lenkrad 76, der bei Unterbrechung der Energiezufuhr einfach stromlos wird und kein Moment mehr aufbringt; das Lenkrad 76 kann damit frei gedreht werden. Bei allen anderen bewegten Teilsystemen ("Ride-Aktorik" 6, Drehteller 8, Hexapod 70 und Horizontalverschiebevorrichtung 11) sind die einzelnen Aktoren so ausgelegt, dass sie bei Unterbrechung der Energiezufuhr automatisch gebremst werden und das System damit möglichst schnell unter Berücksichtigung maximal zulässiger Verzögerungen zum Stillstand kommt. Aufgrund des geringen Bewegungsraums der "Ride-Aktorik" 6 verharren Sitz 75 und Pedal 77 damit praktisch in ihrer normalen Stellung. Beim Drehteller 8 ist die Stillstandslage unerheblich.

Der Hexapod 70 kommt im ungünstigsten Fall in einer Lage zum Stillstand, in dem die Bewegungsplattform 71 extrem geneigt ist. Hier ist deshalb noch eine zweite Notlaufstufe vorgesehen, mit welcher die Bewegungsplattform 71 nach Stillstand des Gesamtsystems 1 weich in eine ebene Lage abgesenkt wird. Dies wird beispielsweise durch Lösen der Bremsen und Nutzung der Aktoren 72,73 als Dämpfer erreicht, wozu diese (im Fall eines elektrisch betriebenen Hexapods 70') mit entsprechend ausgelegten Widerständen elektrisch kurzgeschlossen oder (im Fall eines hydraulisch betriebenen Hexapods 70") über entsprechende Abströmventile druckentspannt werden.

Bezüglich des Sicherheitskonzepts der Horizontalverschiebevorrichtung 11 wird im folgenden als Spezialfall die kaskadierten Ausführungsform der Figuren 1 bis 6 - bestehend aus der Portalbrücke 26 und der auf dieser befestigten ersten Linearverschiebevorrichtung 24 - betrachtet. Das Hauptziel besteht hierbei darin, übergroße und somit sicherheitskritische Winkelauslenkungen der Traverse 27 zu verhindern. Als Bremsen für die elektrischen Antriebe 36,36',51 der Portalbrücke 26 und der ersten Linearverschiebeeinrichtung 24 kommen entweder mechanische Bremsen zum Einsatz, welche eine konstante (d.h. von der Geschwindigkeit der Antriebe unabhängige) Bremskraft aufweisen, oder die elektromagnetischen Antriebe 36,36',51 selbst werden durch Kurzschließen mit entsprechend ausgelegten Widerständen als Bremsen genutzt, in welchem Fall sich eine zur Geschwindigkeit proportionale Bremskraft ergibt. Auch eine Kombination beider Prinzipien ist möglich. Da die Bremskraft immer in Antriebsrichtung wirkt und da die Horizontalverschiebeeinheit 11 mehrere Antriebe 36,36',51 umfasst, ist die bei gleicher konstanter Bremskraft aller Antriebe 36,36',51 resultierende Verzögerung stets richtungsabhängig. Wenn beispielsweise die Horizontalverschiebevorrichtung 11 sowohl in X- als auch in Y-Richtung mit einer 10 m/s² entsprechenden Verzögerung bremst, so ergibt sich bei einer Fahrt in Diagonalrichtung eine Verzögerung von 14 m/s².

Werden an den Antrieben 36,36',51 mechanische Bremsen vorgesehen, die eine konstante Bremskraft in X- und Y-Richtung aufbringen, so ergibt sich in jeder Achsrichtung X,Y jeweils eine näherungsweise konstante Verzögerung von 7,1 m/s² und damit ein Bremsweg von 7,1 m. In Y-Richtung ist dies im wesentlichen unabhängig von der Position des Trägerschlittens 14. In X-Richtung hingegen hat die Schlittenposition großen Einfluss: Befindet sich der Trägerschlitten 12 außerhalb der Mitte, so ist der Massenmittelpunkt der Basiseinheit 14 gegenüber der Mitte verschoben, was bei konstanten, gleich großen Bremskräften links und rechts unterschiedlich lange Bremswege entlang der beiden Führungen 35,35' und somit eine Winkelauslenkung der Traverse 27 zur Folge hat. Dies kann durch Hinzunahme von (elektromagnetischen) Dämpfern in X-Richtung, welche eine Bremskraft proportional zur Geschwindigkeit aufbringen, teilweise kompensiert werden. Eine unerwünscht große Winkelauslenkung der Traverse 27 kann somit verhindert werden. Weiterhin sind Puffer 84 vorgesehen, welche die Horizontalverschiebevorrichtung 11 im schlimmsten Fall nur ungenügend wirkender Bremsen vollends zum Stillstand bringen.

Bei der allgemeinen Auslegung der Bremsen des Bewegungssystems 1 muss beachtet werden, dass Fahrersitz 75 und Hexapod 70 jeweils relativ zu der Horizontalverschiebevorrichtung 11 gebremst werden, die selbst gerade gebremst wird. Die Bremsung muss daher hierarchisch in einer solchen Weise erfolgen, dass das System mit dem kleinsten (relativen) Bewegungsraum (also der Fahrersitz 75) als erstes zum Stillstand kommt, danach der Hexapod 70 und dann die Horizontalverschiebevorrichtung 11. Um eine möglichst schnelle Bremsung zu erreichen, müssen jedoch alle Systeme 75,70,11 möglichst gleichzeitig bremsen; kein System darf auf das vollständige Anhalten eines anderen warten. Dies bedeutet, dass der Fahrersitz 75 beim Bremsen die stärkste Geschwindigkeitsabnahme, der Hexapod 70 eine mittelstarke Geschwindigkeitsabnahme und die Horizontalverschiebevorrichtung 11 die geringste Geschwindigkeitsabnahme erfährt. Im umgekehrten Fall würde sonst beispielsweise bei Bremsung der Portalbrücke 26 der Hexapod 70 aufgrund zu geringer Bremskräfte einfach bis in seine Anschläge "weiterfahren".

Wurden zur reibungsarmen Lagerung des Trägerschlittens 12 und der Stützen 33 der Portalbrücke 26 in den bisher betrachteten Ausführungsformen Luftlager 16,34 betrachtet, so kann die Lagerung dieser Komponenten prinzipiell auch mittels reibungsarmer Rollen- oder Gleitlager erfolgen.

Anstelle eines Hexapoden 70 kann die sechsachsige Bewegungseinheit 10 auch durch eine aufgelöste Hexapodkinematik - analog zur oben beschriebenen Kinematik für die Fahrersitzkonsole 75 - realisiert werden.

## Patentansprüche

1. Bewegungssystem für einen Fahrsimulator zur Erzeugung von Bewegungseindrücken auf Testpersonen
- mit einer Kabine, die einen Sitz und Lenkeinrichtungen und Betätigungspedale umfasst,
- wobei der Sitz und/oder die Lenkeinrichtungen und Betätigungspedale jeweils über Aufnahmen beweglich angeordnet sind und über zugeordnete Stellelemente in mehreren Bewegungsrichtungen über eine Steuereinheit zur Verschiebung relativ zueinander veränderlich ansteuerbar sind,
**dadurch gekennzeichnet,**
**dass** die Kabine (5) ortsfest auf einem Manipulator (7) angeordnet ist, welcher die folgenden Komponenten umfasst:
- einen Drehteller (8) zur gesteuerten Drehbewegung der Kabine (5) um ihre Vertikalachse,
- eine sechsachsige Bewegungseinheit (10) zur Bewegung des Zusammenbaus aus Drehteller (8) und Kabine (5) in allen sechs Raumfreiheitsgraden,
- eine Horizontalverschiebevorrichtung (11) zur gesteuerten Verschiebung und Beschleunigung des Zusammenbaus aus sechsachsiger Bewegungseinheit (10), Drehteller (8) und Kabine (5) entlang der beiden Horizontalachsen,
und **dass** die sechsachsige Bewegungseinheit (10) ortsfest auf einem Trägerschlitten (12) montiert ist, welcher frei verschieblich auf einer durch die Verfahrwege der Horizontalverschiebevorrichtung (11) aufgespannten ebenen Bodenfläche (13) gelagert ist und mittels der Horizontalverschiebevorrichtung (11) gegenüber dieser Bodenfläche (13) gezogen und/oder geschoben wird.

2. Bewegungssystem nach Anspruch 1,
**dadurch gekennzeichnet,**
**dass** der Trägerschlitten (12) über Luftlager (16) und/oder Luftkissen gegenüber der Bodenfläche (13) gelagert ist.

3. Bewegungssystem nach Anspruch 1 oder 2,
**dadurch gekennzeichnet,**
**dass** die Horizontalverschiebevorrichtung (11) aus zwei Linearverschiebevorrichtungen (24,25) besteht, und zwar aus
- einer ersten Linearverschiebevorrichtung (24) zur gesteuerten Verschiebung und Beschleunigung des Zusammenbaus aus sechsachsiger Bewegungseinheit (10), Drehteller (8) und Kabine (5) entlang einer ersten Horizontalachse (Y) und
- einer zweiten Linearverschiebevorrichtung (25) zur gesteuerten Verschiebung und Beschleunigung des Zusammenbaus aus erster Linearverschiebevorrichtung (24), sechsachsiger Bewegungseinheit (10), Drehteller (8) und Kabine (5) entlang einer zweiten Horizontalachse (X), welche näherungsweise senkrecht gegenüber der ersten Horizontalachse (Y) ausgerichtet ist.

4. Bewegungssystem nach Anspruch 3,
**dadurch gekennzeichnet,**
**dass** die zweite Linearverschiebevorrichtung (25) als Portalbrücke (26) ausgestaltet ist.

5. Bewegungssystem nach Anspruch 4,
**dadurch gekennzeichnet,**
**dass** sich die Portalbrücke (26) über Luftlager (34) und /oder Luftkissen gegenüber der Bodenfläche (13) abstützt.

6. Bewegungssystem nach Anspruch 3 oder 4,
**dadurch gekennzeichnet,**
**dass** die Bewegungsanregung der Portalbrücke (26) mittels zweier endseitig angeordneter Bandzugantriebe (37) erfolgt.

7. Bewegungssystem nach Anspruch 3 oder 4,
**dadurch gekennzeichnet,**
**dass** die Bewegungsanregung der Portalbrücke (26) mittels zweier endseitig angeordneter elektromagnetischer Linearantriebe (43, 43') erfolgt.

8. Bewegungssystem nach Anspruch 6 oder 7,
**dadurch gekennzeichnet,**
**dass** die Portalbrücke (26) mit einem der beiden Antriebe (36) über ein Drehgelenk (48) verbunden ist und gegenüber dem anderen Antrieb (36') über ein eine begrenzt linear in Y-Richtung verschiebliche Drehverbindung (49) gelagert ist.

9. Bewegungssystem nach einem der Ansprüche 4 bis 8,
**dadurch gekennzeichnet,**
**dass** zum Antrieb der ersten Linearverschiebevorrichtung (24) ein elektromagnetischer Linearantrieb (51) vorgesehen ist, mit Hilfe dessen der Zusammenbau aus sechsachsiger Bewegungseinheit (10), Drehteller (8) und Kabine (5) gegenüber der Portalbrücke (26) verschiebbar ist.

10. Bewegungssystem nach Anspruch 3,
**dadurch gekennzeichnet,**
**dass** der Trägerschlitten (12) über Koppelelemente (55,55') gegenüber der ersten Linearverschiebevorrichtung (24) abgestützt ist.

11. Bewegungssystem nach Anspruch 3,
**dadurch gekennzeichnet,**
**dass** die Anbindung der ersten Linearverschiebevorrichtung (24) an die zweite Linearverschiebevorrichtung (25) in einer Höhe (85) erfolgt, die der Höhe des Schwerpunkts der zweiten Linearverschiebevorrichtung (25) entspricht.

12. Bewegungssystem nach Anspruch 3,
**dadurch gekennzeichnet,**
**dass** der mindestens eine Antrieb (51) der ersten Linearverschiebevorrichtung (24) und/oder der mindestens eine Antrieb 36,36') der zweiten Linearverschiebevorrichtung (25) mit einem passiven Bremssystem versehen ist.

13. Bewegungssystem nach Anspruch 3,
**dadurch gekennzeichnet,**
**dass** die erste und/oder die zweite Linearverschiebevorrichtung (24,25) mit einem Endanschlag (84) zur Ableitung der im Bremsfall auftretenden Kräfte versehen ist.

14. Bewegungssystem nach Anspruch 1 oder 2,
**dadurch gekennzeichnet,**
**dass** die Horizontalverschiebevorrichtung (11) durch zwei Bandzugantriebe oder zwei Paare von Bandzugantrieben 60,60') gebildet ist, deren Wirkungsrichtungen näherungsweise senkrecht aufeinander stehen.

15. Bewegungssystem nach Anspruch 1 oder 2,
**dadurch gekennzeichnet,**
**dass** die Horizontalverschiebevorrichtung (11) durch einen elektromagnetischen Planarantrieb (65) gebildet ist.

16. Bewegungssystem nach Anspruch 15,
**dadurch gekennzeichnet,**
**dass** der elektromagnetische Planarantrieb (65) mindestens zwei elektromagnetisch angetriebene, synchron zueinander bewegbare Verfahrschuhe (67) umfasst, an welche der Trägerschlitten (12) mechanisch angekoppelt ist.

17. Bewegungssystem nach einem der vorhergehenden Ansprüche,
**dadurch gekennzeichnet,**
**dass** die Bewegung der sechsachsigen Bewegungseinheit (10,70) mit Hilfe elektrischer Antriebe (73) erfolgt.

18. Bewegungssystem nach einem der vorhergehenden Ansprüche,
**dadurch gekennzeichnet,**
**dass** die sechsachsige Bewegungseinheit (10) ein Hexapod (70) ist.

19. Bewegungssystem nach einem der vorhergehenden Ansprüche,
**dadurch gekennzeichnet,**
**dass** die Kabine (5) in einem fest mit dem Drehteller (8) verbundenen Dom (4) angeordnet ist.

## Claims

1. Movement system for a driving simulator for the generation of impressions of movement in test subjects,
- with a cab including a seat and steering gear and operating pedals,
- wherein the seat and/or the steering gear and operating pedals are movably located on mountings and can be driven to be displaced relative to one another by means of associated actuating elements in various directions of movement via a control unit,
**characterised in that**
the cab (5) is mounted in a fixed location on a manipulator (7) comprising the following components:
- a rotary table (8) for the controlled rotary movement of the cab (5) about its vertical axis,
- a six-axis movement unit (10) for moving the assembly consisting of rotary table (8) and cab (5) in all six degrees of spatial freedom,
- a horizontal traversing device (11) for the controlled traversing and acceleration of the assembly consisting of six-axis movement unit (10), rotary table (8) and cab (5) along the two horizontal axes,
and **in that** the six-axis movement unit (10) is mounted in a fixed location on a carriage (12), which is mounted for free movement on a level floor surface (13) defined by the traverse of the horizontal traversing device (11) and which is pushed and/or pulled in relation to said floor surface (13) by means of the horizontal traversing device (11).

2. Movement system according to claim 1,
**characterised in that**
the carriage (12) is mounted in relation to the floor surface (13) via air bearings (16) and/or air cushions.

3. Movement system according to claim 1 or 2,
**characterised in that**
the horizontal traversing device (11) comprises two linear traversing devices (24, 25), these being
- a first linear traversing device (24) for the controlled traversing and acceleration of the assembly consisting of six-axis movement unit (10), rotary table (8) and cab (5) along a first horizontal axis (Y) and
- a second linear traversing device (25) for the controlled traversing and acceleration of the assembly consisting of six-axis movement unit (10), rotary table (8) and cab (5) along a second horizontal axis (X) oriented approximately at right angles to the first horizontal axis (Y).

4. Movement system according to claim 3,
**characterised in that**
the second linear traversing device (25) is designed as a portal bridge (26).

5. Movement system according to claim 4,
**characterised in that**
the portal bridge (26) is supported in relation to the floor surface (13) by means of air bearings (34) and/or air cushions.

6. Movement system according to claim 3 or 4,
**characterised in that**
the movement of the portal bridge (26) is initiated by two end-mounted belt traction drives (37).

7. Movement system according to claim 3 or 4,
**characterised in that**
the movement of the portal bridge (26) is initiated by two end-mounted electromagnetic linear actuators (43, 43').

8. Movement system according to claim 6 or 7,
**characterised in that**
the portal bridge (26) is connected to one of the two drives (36) by a pivot joint (48) and mounted relative to the other drive (36') via a rotary connection (49) capable of limited linear traverse in the Y-direction.

9. Movement system according to any of claims 4 to 8,
**characterised in that**
an electromagnetic linear actuator (51), with the aid of which the assembly consisting of six-axis movement unit (10), rotary table (8) and cab (5) can be displaced relative to the portal bridge (26), is provided to drive the first linear traversing device (24).

10. Movement system according to claim 3,
**characterised in that**
the carriage (12) is supported in relation to the first linear traversing device (24) via coupling elements (55, 55').

11. Movement system according to claim 3,
**characterised in that**
the first linear traversing device (24) is linked to the second linear traversing device (25) at a level (85) corresponding to the level of the centre of gravity of the second linear traversing device (25).

12. Movement system according to claim 3,
**characterised in that**
the at least one drive (51) of the first linear traversing device (24) and/or the at least one drive (36, 36') of the second linear traversing device (25) are/is fitted with a passive braking system.

13. Movement system according to claim 3,
**characterised in that**
the first and/or the second linear traversing device (24, 25) are/is fitted with an end stop (84) to dissipate any forced generated in a braking process.

14. Movement system according to claim 1 or 2,
**characterised in that**
the horizontal traversing device (11) is represented by two belt traction drives or by two pairs of belt traction drives (60,60'), the directions of action of which are approximately at right angles to one another.

15. Movement system according to claim 1 or 2,
**characterised in that**
the horizontal traversing device (11) is represented by an electromagnetic planar drive (65).

16. Movement system according to claim 15,
**characterised in that**
the electromagnetic planar drive (65) comprises at least two electromagnetically driven, synchronised traversing shoes (67), to which the carriage (12) is mechanically coupled.

17. Movement system according to any of the preceding claims,
**characterised in that**
the movement of the six-axis movement unit (10, 70) is achieved with the aid of electric drives (73).

18. Movement system according to any of the preceding claims,
**characterised in that**
the six-axis movement unit (10) is a hexapod.

19. Movement system according to any of the preceding claims,
**characterised in that**
the cab (5) is located in a dome (4) permanently joined to the rotary table (8).

## Revendications

1. Système de déplacement pour un simulateur de conduite pour générer des impressions de déplacement sur des personnes soumises à un test
- avec une cabine qui comprend un siège et des appareils de guidage et des pédales d'actionnement,
- le siège et/ou les dispositifs de guidage et pédales d'actionnement étant disposés de façon mobile respectivement au moyen de logements et pouvant être activés de façon variable au moyen d'éléments de positionnement attribués dans plusieurs directions de déplacement au moyen d'une unité de commande pour le déplacement les uns par rapport aux autres,
**caractérisé en ce que**
la cabine (5) est disposée de façon fixe sur un manipulateur (7) qui comprend les composants suivants :
- un plateau tournant (8) pour le mouvement de rotation commandé de la cabine (5) autour de son axe vertical,
- une unité de déplacement (10) à six axes pour le déplacement de l'ensemble constitué du plateau tournant (8) et de la cabine (5) dans l'ensemble des six degrés de liberté dans l'espace,
- un dispositif de déplacement horizontal (11) pour le déplacement et l'accélération commandés de l'ensemble constitué de l'unité de déplacement (10) à six axes, du plateau tournant (8) et de la cabine (5) le long des deux axes horizontaux,
et **en ce que** l'unité de déplacement (10) à six axes est montée de façon fixe sur un coulisseau support (12), qui est fixé de façon librement coulissante sur une surface de sol (13) plane tendue par les voies de déplacement du dispositif de déplacement horizontal (11) et est tiré et/ou poussé au moyen du dispositif de déplacement horizontal (11) par rapport à cette surface du sol (13).

2. Système de déplacement selon la revendication 1, **caractérisé en ce que** le coulisseau support (12) est fixé au moyen de paliers d'air (16) et/ou de coussins d'air par rapport à la surface du sol (13).

3. Système de déplacement selon la revendication 1 ou 2, **caractérisé en ce que** le système de déplacement horizontal (11) comprend deux dispositifs de déplacement horizontal (24, 25), à savoir
- un premier système de déplacement linéaire (24) pour le déplacement commandé et l'accélération de l'ensemble constitué de l'unité de déplacement (10) à six axes, du plateau tournant (8) et de la cabine (5) le long d'un premier axe horizontal (Y) et
- un second dispositif de déplacement linéaire (25) pour le déplacement commandé et l'accélération de l'ensemble constitué du premier dispositif de déplacement linéaire (24), de l'unité de déplacement (10) à six axes, du plateau tournant (8) et de la cabine (5) le long d'un second axe horizontal (X), qui est orienté à peu près perpendiculairement par rapport au premier axe horizontal (Y).

4. Système de déplacement selon la revendication 3, **caractérisé en ce que** le second dispositif de déplacement linéaire (25) est conçu comme un pont-portique (26).

5. Système de déplacement selon la revendication 4, **caractérisé en ce que** le pont-portique (26) s'appuie au moyen de paliers d'air (34) et/ou de coussins d'air par rapport à la surface du sol (13).

6. Système de déplacement selon la revendication 3 ou 4, **caractérisé en ce que** l'excitation du déplacement du pont-portique (26) s'effectue au moyen de deux entraînements de traction de bande (37) disposés côté extrémité.

7. Système de déplacement selon la revendication 3 ou 4, **caractérisé en ce que** l'excitation de déplacement du pont-portique (26) s'effectue au moyen de deux entraînements linéaires (43, 43') électromagnétiques disposés côté extrémité.

8. Système de déplacement selon la revendication 6 ou 7, **caractérisé en ce que** le pont-portique (26) est relié à l'un des deux entraînements (36) au moyen d'une articulation rotative (48) et est fixé par rapport à l'autre entraînement (36') au moyen d'une liaison rotative (49) coulissante de façon limitée linéairement dans le sens Y.

9. Système de déplacement selon l'une quelconque des revendications 4 à 8, **caractérisé en ce que** pour l'entraînement du premier dispositif de déplacement linéaire (24), il est prévu un entraînement linéaire (51) électromagnétique, à l'aide duquel l'ensemble constitué de l'unité de déplacement (10) à six axes, du plateau tournant (8) et de la cabine (5) peut coulisser par rapport au pont-portique (26).

10. Système de déplacement selon la revendication 3, **caractérisé en ce que** le coulisseau support (12) est soutenu au moyen d'éléments de couplage (55, 55') par rapport au premier dispositif de déplacement linéaire (24).

11. Système de déplacement selon la revendication 3, **caractérisé en ce que** le rattachement du premier dispositif de déplacement linéaire (24) au second dispositif de déplacement linéaire (25) s'effectue à une hauteur (85) qui correspond à la hauteur du centre de gravité du second dispositif de déplacement linéaire (25).

12. Système de déplacement selon la revendication 3, **caractérisé en ce que** le au moins un entraînement (51) du premier dispositif de déplacement linéaire (24) et/ou le au moins un entraînement (36, 36') du second dispositif de déplacement linéaire (25) est/sont doté(s) d'un système de freinage passif.

13. Système de déplacement selon la revendication 3, **caractérisé en ce que** le premier et/ou le second dispositif(s) de déplacement linéaire (24, 25) est/sont pourvu(s) d'une butée finale (84) pour la déviation des forces apparaissant en cas de freinage.

14. Système de déplacement selon la revendication 1 ou 2, **caractérisé en ce que** le dispositif de déplacement horizontal (11) est formé par deux entraînements de traction de bande ou deux paires d'entraînements de traction de bande (60, 60'), dont les sens d'action sont approximativement perpendiculaires les uns par rapport aux autres.

15. Système de déplacement selon la revendication 1 ou 2, **caractérisé en ce que** le dispositif de déplacement horizontal (11) est formé par un entraînement planaire (65) électromagnétique.

16. Système de déplacement selon la revendication 15, **caractérisé en ce que** l'entraînement planaire (65) électromagnétique comprend au moins deux patins de déplacement (67) entraînés de façon électromagnétique et pouvant être déplacés dans un sens synchrone l'un par rapport à l'autre, auxquels est couplé de façon mécanique le coulisseau support (12).

17. Système de déplacement selon l'une quelconque des revendications précédentes, **caractérisé en ce que** le déplacement de l'unité de déplacement (10, 70) à six axes s'effectue à l'aide d'entraînements (73) électriques.

18. Système de déplacement selon l'une quelconque des revendications précédentes, **caractérisé en ce que** l'unité de déplacement (10) à six axes est un hexapode (70).

19. Système de déplacement selon l'une des revendications précédentes, **caractérisé en ce que** la cabine (5) est disposée dans un dôme (4) relié de façon fixe au plateau tournant (8).
